(19) Europäisches Patentamt
European Patent Office
Office européen des brevets

(11) **EP 1 410 092 B1**

(12) **FASCICULE DE BREVET EUROPEEN**

(45) Date de publication et mention
de la délivrance du brevet:
**13.12.2006 Bulletin 2006/50**

(21) Numéro de dépôt: **02706917.8**

(22) Date de dépôt: **01.03.2002**

(51) Int Cl.:
***G02B 26/08*** *(2006.01)*      ***G02B 27/10*** *(2006.01)*

(86) Numéro de dépôt international:
**PCT/FR2002/000755**

(87) Numéro de publication internationale:
**WO 2002/071126 (12.09.2002 Gazette 2002/37)**

(54) **MODULE DE DEFLEXION OPTIQUE**

OPTISCHES ABLENKMODUL

OPTICAL DEFLECTION MODULE

(84) Etats contractants désignés:
**AT BE CH CY DE DK ES FI FR GB GR IE IT LI LU
MC NL PT SE TR**

(30) Priorité: **02.03.2001 FR 0102923**

(43) Date de publication de la demande:
**21.04.2004 Bulletin 2004/17**

(73) Titulaire: **Teem Photonics
38240 Meylan (FR)**

(72) Inventeur: **VALETTE, Serge
F-38100 GRENOBLE (FR)**

(74) Mandataire: **Quantin, Bruno Marie Henri
Santarelli
14 Avenue de la Grande Armée
B.P. 237
75822 Paris Cedex 17 (FR)**

(56) Documents cités:
**EP-A- 0 873 811      GB-A- 2 346 453
US-A- 5 553 175**

- **PATENT ABSTRACTS OF JAPAN vol. 2000, no.
  04, 31 août 2000 (2000-08-31) -& JP 2000 019434
  A (NIPPON SIGNAL CO LTD:THE), 21 janvier 2000
  (2000-01-21)**
- **PATENT ABSTRACTS OF JAPAN vol. 013, no. 342
  (P-908), 2 août 1989 (1989-08-02) -& JP 01 102515
  A (NIPPON TELEGR & TELEPH CORP), 20 avril
  1989 (1989-04-20)**
- **PATENT ABSTRACTS OF JAPAN vol. 2000, no.
  01, 31 janvier 2000 (2000-01-31) -& JP 11 287961
  A (NIPPON SIGNAL CO LTD:THE), 19 octobre
  1999 (1999-10-19)**

**Description**

## 1. Domaine technique

L'invention a pour objet la réalisation d'un module de déflexion optique permettant d'obtenir à partir d'un faisceau optique initial un grand nombre de positions de déflexion angulaires potentielles distinctes, favorablement équidistantes , tout en utilisant des moyens de déflexion n'ayant individuellement qu'un nombre limité (par exemple 2, 3 ou 4) de positions de déflexion. Ainsi l'invention concerne un ensemble de moyens déflecteurs élémentaires dont la combinaison permet d'amplifier le nombre de positions de déflexion optique par rapport au nombre de positions de déflexion qu'autorise chacun de ces moyens déflecteurs.

L'invention se généralise aisément à un ensemble de faisceaux optiques incidents disposés suivant une configuration spatiale quelconque (barrettes , matrices...).

Les domaines d'applications sont nombreux, notamment :

- routage d'informations transportées par fibres optiques,
- stockage de l'information,
- inspection de surface par voies optiques,
- télémétrie,
- plus généralement tous les secteurs demandant un balayage spatial, en particulier incrémental, de faisceaux optiques.

## 2. Etat de la technique

Il est connu en optique de défléchir un faisceau lumineux de différentes manières : miroirs tournants , cellules acousto-optiques , réseaux de diffraction adressables électriquement...

Toutes ces méthodes permettent une déflexion suivant un grand nombre de positions angulaires possibles.

L'utilisation de miroirs tournants est une des plus connues ; elle met en général en jeu un seul miroir pouvant prendre un nombre élevé de positions angulaires, soit incrémentales (utilisation de moteurs pas à pas) soit analogiques (utilisation de moteurs tournants).

Toutes ces méthodes sont satisfaisantes dans des montages classiques où l'encombrement du système de déflexion n'est pas un paramètre critique.

Elles sont par contre très mal adaptées dans des architectures complexes où plusieurs faisceaux lumineux doivent être pris en compte et qui nécessitent l'utilisation de micro-miroirs le plus souvent réalisés par les procédés de fabrication mis en jeu dans les micro-technologies .

En effet de tels micro-miroirs présentant un grand nombre de positions angulaires stables sont très difficiles à fabriquer et doivent être associés à des asservissements électroniques très complexes, pénalisants à la fois sur le plan de la fiabilité et sur le plan économique.

Par contre, il est beaucoup plus simple, du point de vue technologique, de réaliser des micro-miroirs pouvant ne prendre qu'un nombre limité de positions angulaires (2 ou 3 autour d'un axe donné) qui peuvent alors correspondre à des positions mécaniques stables et prédéterminées ne nécessitant pas d'asservissement.

Dans beaucoup d'applications cependant, le nombre limité de positions angulaires accessibles obtenu avec ces micro-miroirs constitue un inconvénient rédhibitoire.

Les documents JP-A-2000 019434 et JP-A-01 102515 décrivent des sélecteurs optiques pour la commutation ayant des éléments de déflexion angulaire.

EP-A-0873811 décrit un dispositif de correction de position pour un marqueur laser ayant des éléments de déflexion angulaire et des éléments de conjugaison optique.

## 3. Principe de l'invention

L'invention a pour objet de surmonter cette difficulté en permettant la multiplication du nombre de positions angulaires accessibles, grâce à l'utilisation d'une architecture particulière mettant en jeu une cascade de tels micro-miroirs et plus généralement des éléments de déflexion angulaire considérés. Elle prend tout son intérêt dans le domaine du routage optique.

L'invention vise ainsi un module permettant d'obtenir un grand nombre de positions de déflexion angulaire distinctes, avantageusement équidistantes, à partir d'un faisceau lumineux, en utilisant des moyens de déflexion qui, individuellement, ne permettent d'obtenir qu'un nombre limité de telles positions de déflexion .

L'invention utilise à cet effet une mise en cascade d'éléments de déflexion, associée à des éléments de conjugaison optique appropriés entre les éléments de déflexion consécutifs de la cascade. Ce principe général de l'invention peut se décliner suivant différentes architectures en fonction des modes de fonctionnement des éléments de déflexion mis en jeu et en particulier dans le cas de éléments de déflexion de type micro-miroirs.

Plus particulièrement l'invention propose un module de déflexion optique adapté à générer une pluralité de positions angulaires pour au moins un faisceau optique incident, ce module comportant pour chaque faisceau optique une ligne comportant :

- une pluralité de N éléments de déflexion ($MD_1$, $MD_2$,... $MD_I$... $MD_N$) disposés en cascade et pouvant prendre chacun, respectivement, $P_1$, $P_2$,... $P_I$,... ou $P_N$ configurations de déflexion angulaire distinctes autour d'au moins un axe donné, et
- une pluralité de N-1 éléments de conjugaison optique ($MCO_1$, $MCO_2$,... $MCO_I$, ..., $MCO_{N-1}$) disposés chacun entre deux éléments de déflexion successifs en sorte de réaliser une conjugaison objet-image entre ces éléments de déflexion successifs.

On appréciera que l'invention propose ainsi de n'utiliser que des éléments de déflexion simples dans un nombre relativement limité, dans la mesure où chacun intervient dans le traitement de chaque faisceau défléchi par le précédent. Malgré l'augmentation, par rapport aux solutions connues, du nombre d'éléments de déflexion, il faut bien comprendre que, non seulement leur construction mais aussi leur commande est simplifiée. Dans le cas particulier où ces éléments n'ont que deux positions, la commande en position peut ainsi se faire par la simple donnée de la valeur d'un bit (0 pour l'une des positions et 1 pour l'autre). En outre, cela permet de choisir des positions en butée, or des positions prédéterminées et fixées par des butées rendent inutile le besoin d'asservissement électronique complexe.

Selon des dispositions préférées de l'invention, éventuellement combinées :

- le module, adapté à générer une pluralité de positions angulaires pour une pluralité de faisceaux optiques incidents, comporte une ligne pour chaque faisceau, et les éléments de déflexion et les éléments de conjugaison optique de chaque ligne sont regroupés avec les éléments homologues des autres lignes au sein d'ensembles constitués de barrettes, ou de matrices. Il s'agit de configurations classiques, faciles à fabriquer et à manipuler. Ces ensembles regroupent donc les éléments de même nature et de même indice.
- les éléments de déflexion regroupés au sein de chaque ensemble ont des nombres $P_1$, $P_2$,... $P_I$,... ou $P_N$ de configurations de déflexion angulaire distinctes sont identiques. L'ensemble a ainsi une structure modulaire, avec des éléments faciles à remplacer.
- les éléments de déflexion ($MD_1$, $MD$,... $MD_I$... $MD_N$) disposés en cascade et pouvant prendre chacun, respectivement, $P_1$, $P_2$,... $P_I$,... ou $P_N$ configurations de déflexion angulaire distinctes ont des axes donnés uniques et parallèles. Le montage de ces éléments en est facilité, et la combinaison des déflexions ainsi possible correspond à une figure géométrique facile à gérer.
- les éléments de déflexion ($MD_1$, $MD_2$,... $MD_I$,... $MD_N$) disposés en cascade et pouvant prendre chacun, respectivement, $P_1$, $P_2$,... $P_I$,... ou $P_N$ configurations de déflexion angulaire distinctes ont des axes donnés uniques parallèles à l'un ou l'autre de deux axes de référence (OX, OY). Le même commentaire qu'au paragraphe précédent s'applique ici, malgré une simplicité un peu moindre dans la gestion des déflexions provoquées par les éléments successifs.
- les éléments de déflexion ($MD_1$, $MD_2$,... $MD_I$,... $MD_N$) disposés en cascade et pouvant prendre chacun, respectivement, $P_1$, $P_2$,... $P_I$,... ou $P_N$ configurations de déflexion angulaire distinctes ont chacun deux axes donnés parallèles à deux axes de référence (OX, OY). Les éléments restent simples de conception, mais permettent de satisfaire aux commentaires des deux paragraphes précédents.
- les configurations de déflexion angulaire distinctes sont équidistantes autour des axes donnés. Cela correspond bien entendu à une configuration géométrique particulièrement facile à contrôler.

Un cas particulièrement intéressant est celui où les éléments de déflexion en cascade $MD_1$, $MD_2$.... $MD_I$,... $MD_N$ sont des éléments (10, 11, 12, 13 ...) pouvant prendre chacun, par basculement autour d'au moins l'axe donné, respectivement, $P_1$, $P_2$,... $P_I$,... $P_N$ configurations de positions angulaires distinctes permettant de générer un nombre équivalent de positions de déflexion angulaire distinctes $PDA_1$, $PDA_2$,... $PDA_I$,... $PDA_N$, chacune séparée angulairement par des valeurs respectives $\delta\theta_1$, $\delta\theta_2$,... $\delta\theta_I$,... $\delta\theta_N$ autour d'au moins une famille d'axes de rotations $OX_1$, $OX_2$,...$OX_I$..., $OX_N$ . Les éléments de déflexion de type miroir ayant un petit nombre de positions sont particulièrement simples à réaliser, même dans de petites tailles, surtout lorsqu'on ne prévoit que deux positions (qui peuvent donc être en butée), voire trois positions (deux positions extrêmes de part et d'autre d'une position de référence). Il faut noter que ces deux ou trois positions sont définies selon un axe de basculement unique, et qu'en prévoyant plusieurs axes de basculement, on multiplie ainsi le nombre total des positions possibles.

Selon des dispositions préférées avantageusement combinées :

- les familles d'axes de rotation sont de direction commune. Cela correspond à un cas particulièrement simple.

- les excursions angulaires totales de chacun des éléments de déflexion sont égales. Les éléments peuvent donc être identiques.
- les grossissements $G_{I,I+1}$ permettant la conjugaison deux à deux des différents éléments de déflexion consécutifs $MD_I$ et $MD_{I+1}$, sont égaux à :

  $G_{I,I+1} = P_I * (P_{I+1}-1) /(P_I-1)$, ce qui conduit à des positions angulaires équidistantes (le symbole * désigne une multiplication).

- les éléments de déflexion (10, 11, 12, 13...) présentent chacun deux positions angulaires distinctes séparées d'un angle $\delta\theta X$ autour d'axes parallèles à une direction commune OX et deux positions angulaires distinctes séparées d'un angle $\delta\theta Y$ autour d'axes parallèles à une direction commune OY et tel que les grossissements $G_{I,I+1}$ des différents éléments de conjugaison optique sont tous égaux à 2, l'angle $\delta\theta Y$ étant avantageusement égal à $\delta\theta X$. et l'axe OY étant de préférence perpendiculaire à OX. Il s'agit d'une configuration très simple.
- les éléments de déflexion sont des miroirs orientables ; selon un mode avantageux, ils sont orientables suivant deux positions angulaires autour de chaque axe de basculement et le grossissement $G_{I,I+1}$ est égal à 2.
- le module est caractérisé par la mise en série de deux cascades successives dont les différents éléments de déflexion ne peuvent prendre des positions angulaires $P_1$, $P_2$,... $P_I$,... $P_N$ que suivant une direction commune unique et dans lesquelles la direction commune unique des axes de rotation de chacun des éléments de déflexion de la première cascade est choisi orthogonale à la direction commune des axes de rotation de chacun des éléments de déflexion de la seconde cascade. Cela permet d'obtenir une matrice de positions de déflexion angulaires.
- le nombre de positions angulaires distinctes $P_1$, $P_2$,... $P_I$,... $P_N$ pouvant être prises par les différents éléments des moyens de déflexion $MD_1$, $MD_2$,... $MD_I$,... $MD_N$ autour des différents axes de rotation de direction commune $OX_1$, $OX_2$,...$OX_I$...,$OX_N$ est égal à 2 ou 3, les grossissements $G_{I,I+1}$ pouvant alors prendre les différentes valeurs suivantes :

$$G_{I,I+1} = P_I *( P_{I+1} -1) /( P_I -1) = 2 \text{ pour } P_I =2 \text{ et } P_{I+1}=2$$

$$G_{I,I+1} = P_I *( P_{I+1} -1) /( P_I -1) = 3 \text{ pour } P_I =3 \text{ et } P_{I+1}=3$$

$$G_{I,I+1} = P_I *( P_{I+1} -1) /( P_I -1) = 4 \text{ pour } P_I =2 \text{ et } P_{I+1}=3$$

$$G_{I,I+1} = P_I *( P_{I+1} -1) /( P_I -1) = 3/2 \text{ pour } P_I =3 \text{ et } P_{I+1}=2$$

Ainsi que cela a déjà été indiqué, le cas où ce nombre est égal à 2 est particulièrement facile à gérer, par un simple bit à chaque fois.

- les éléments de déflexion sont constitués de micro-miroirs orientables réalisés suivant les procédés de fabrication collective mis en jeu dans les micro-technologies, et/ou les éléments de conjugaison optique associés à deux moyens de déflexion consécutifs comportent respectivement au moins une lentille ; de manière préférée, chaque élément de conjugaison associé à deux éléments de déflexion consécutifs comporte au moins deux lentilles en configuration confocale dont le rapport des focales est égal au grossissement recherché entre les deux éléments de déflexion.

Quelque soit le détail des éléments, de manière préférée :

- les éléments de déflexion mis en jeu sont globalement inclinés par rapport aux axes optiques du dispositif d'un angle φ choisi égal à 45°.
- les moyens de déflexion et de conjugaison optique sont groupés en barrettes ou en matrices et sont globalement inclinés d'un même angle φ par rapport à l'axe optique général du dispositif, mais pour lequel chacun des axes optiques des différents éléments (20, 21, 22, 23 ...) composant les moyens de conjugaison reste parallèle à cet axe optique général, minimisant ainsi les aberrations induites par ces différents éléments sur les différents faisceaux défléchis mis en jeu.

- les positions de déflexion de chacun des éléments de déflexion sont contrôlées par des moyens de contrôle utilisant :

  des éléments de séparation spatiale permettant de prélever une fraction de la puissance lumineuse des faisceaux optiques de signal défléchis par les différents moyens de déflexion.
  des éléments optiques de projection permettant de transformer de manière biunivoque les différentes positions de déflexion angulaire en autant de positions spatiales, ces moyens optiques d'imagerie étant groupés suivant des configurations identiques à celles des moyens de déflexion,
  des éléments de détection des positions spatiales ainsi formées comportant un nombre de points au moins égal au nombre total de positions angulaires générées au niveau de l'étage de contrôle considéré, la configuration des points du photodétecteur étant homothétique de celle de l'ensemble des positions de déflexion angulaire à contrôler.

- les moyens optiques de projection sont associés à des moyens de grandissement d'image.
- les moyens de détection sont des barrettes ou des matrices de photodétecteurs CMOS.
- les moyens de contrôle des positions de déflexion angulaire utilisent des faisceaux optiques annexes de longueur d'onde favorablement différente de celle des faisceaux principaux, et superposés à ces derniers à l'aide de lames dichroïques.

De manière également préférée, le module optique comporte en outre un élément de conjugaison supplémentaire disposé après le dernier élément de déflexion.

L'élément de conjugaison supplémentaire permet d'ajuster la valeur des écarts angulaires entre les faisceaux défléchis. De façon avantageuse, cet élément comporte deux lentilles placées en configuration confocale.

## 4. Liste des figures

Les objets, caractéristiques et avantages de l'invention ressortent de la description qui suit, donnée à titre d'exemple illustratif non limitatif en regard des dessins annexés sur lesquels :

- la figure 1a présente le principe d'un module de déflexion optique selon l'invention à une seule ligne, mettant en oeuvre une cascade de déflecteurs optiques élémentaires,
- la figure 1b présente le principe d'un module de déflexion optique selon l'invention à plusieurs lignes, mettant en oeuvre une cascade de groupes de déflecteurs optiques,
- la figure 2 est un schéma d'un module de déflexion optique selon la figure 1a, dans lequel les déflecteurs optiques individuels sont du type miroir,
- la figure 3a est un schéma de réalisation d'un module de déflexion optique mettant en jeu une cascade de 2 moyens de déflexion à 4 éléments de type miroirs (angle d'inclinaison $\varphi = 45°$) pour 4 faisceaux incidents,
- la figure 3b est un schéma de réalisation d'un module similaire, mais avec une cascade de 3 moyens de déflexion à 4 éléments de type miroirs (angle d'inclinaison $\varphi = 45°$),
- la figure 3c est un schéma de réalisation d'encore un autre module similaire, mais avec une cascade de 4 moyens de déflexion à 4 éléments de type miroirs (angle d'inclinaison $\varphi = 45°$),
- la figure 4a est un schéma de principe montrant les positions de déflexion angulaire pour un miroir à 2 positions de rotation autour d'un axe unique OX,
- la figure 4b est un schéma de principe montrant les positions de déflexion angulaire pour un miroir à 2 positions de rotation autour d'un axe OX et à 2 positions de rotation autour d'un axe OY,
- la figure 5 est un schéma montrant l'évolution du nombre de positions angulaires avant (à gauche) et après (à droite) passage par chacun d'une cascade de 5 moyens de déflexion à miroir unique à un axe pouvant prendre 2 positions angulaires autour de cet axe unique OX,
- la figure 6 est un schéma analogue montrant l'évolution du nombre de positions angulaires avant (à gauche) et après (à droite) passage par chacun d'une cascade de 4 moyens de déflexion à miroirs uniques à 2 axes orthogonaux OX et OY et pouvant prendre 2 positions angulaires autour de chacun de ces axes,
- la figure 7 est un schéma de principe d'une double cascade de miroirs uniaxes permettant d'obtenir des figures de déflexion équivalentes à celles d'une cascade de miroirs biaxes,
- la figure 8 est un schéma analogue à ceux des figures 5 et 6, montrant l'évolution du nombre de positions angulaires avant (sous les blocs marqués « incidence ») et après (sous les blocs marqués « réflexion ») passage par chacun des moyens de déflexion de la figure 7, à miroirs uniques pouvant prendre 2 positions angulaires autour d'un axe unique,
- la figure 9 représente un module utilisant une cascade de moyens de déflexion inclinés d'un angle $\varphi$ quelconque par rapport a un plan perpendiculaire à l'axe optique du système,

- la figure 10a représente le module de la figure 9 complété par des moyens de contrôle des positions angulaires, utilisant un prélèvement partiel de la puissance lumineuse des faisceaux défléchis,
- la figure 10b représente le module de la figure 9 complété par des moyens de contrôle des positions angulaires utilisant un prélèvement partiel de la puissance lumineuse de faisceaux optiques annexes, et
- la figure 11 est un schéma de principe de deux éléments de déflexion conjugués par deux lentilles confocales.

## 5. Description détaillée de l'invention

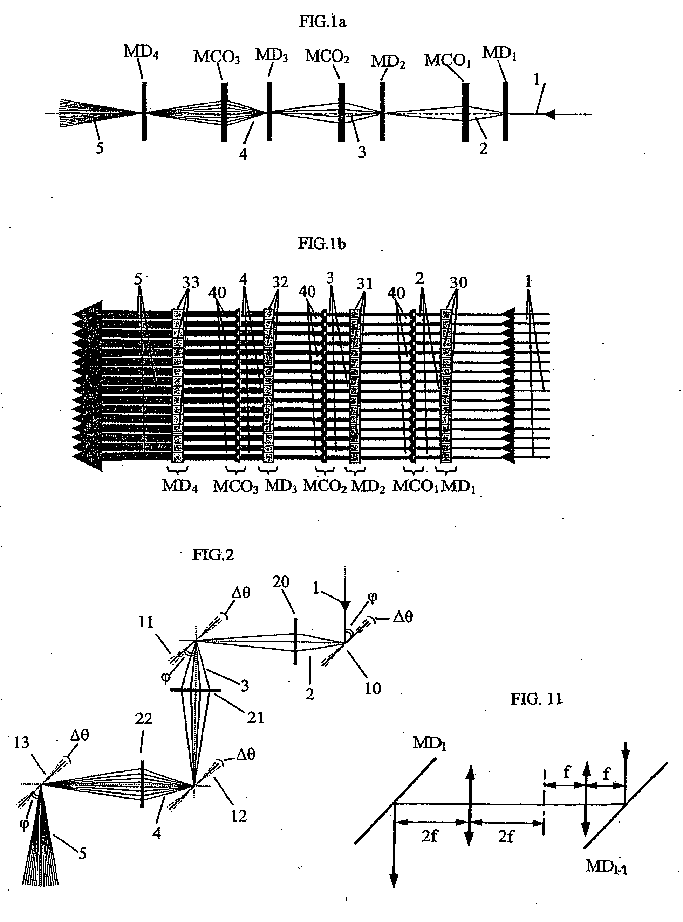

La figure 1 a illustre le principe général de l'invention mettant en jeu la déflexion d'un faisceau lumineux incident 1 unique par une cascade de N (ici égal à 4) moyens élémentaires de déflexion appelés $MD_I$ (l'indice I désigne le numéro de l'élément dans la cascade) et désignés à la figure 2 par les références numériques 10, 11, 12 et 13. Par simplification et sans que la généralité de l'architecture proposée soit mise en cause, les moyens de déflexion dessinés sur la figure 1a fournissent chacun 2 positions de déflexion angulaire situées dans un seul plan de déflexion (déflexion vers le haut ou vers le bas dans le plan de la figure). De manière générale, les moyens déflecteurs d'un module selon l'invention ont, individuellement, un petit nombre de positions possibles ; au minimum 2 positions voire 3 ou même 4 ; en pratique ce « faible nombre » de positions dépend de la technologie employée.

Des moyens optiques de conjugaison appelés MCOI (au nombre de 3 sur la figure 1a, c'est à dire dont le nombre est inférieur de 1 au nombre des moyens de déflexion) et désignés par les références numériques 20, 21 et 22 à la figure 2, assurent une conjugaison objet-image appropriée entre deux moyens de déflexion consécutifs avec des grossissement $G_{12}$, $G_{23}$ et $G_{34}$ appropriés (les grossissements $G_{I,I+1}$ entre les moyens de déflexion I et I+1 étant ici égaux à 2 comme le recommandera la suite de la description). La figure 1a illustre clairement la multiplication, en sortie de chacun des moyens de déflexion, du nombre de faisceaux potentiellement défléchis 2, 3, 4 et 5.

La figure 1b montre le principe général de l'invention dans le cas d'un nombre K quelconque de faisceaux incidents 1 (K est ici égal à 16) avec l'utilisation de moyens de déflexion en cascade (au nombre de 4 sur la figure) disposés en 4 barrettes 30, 31, 32, 33 de K éléments de déflexion, et de moyens de conjugaison optique disposés en 3 barrettes 40, 41 , 42 de K éléments de conjugaison. Cet arrangement selon l'invention permet de générer, à partir de chacun des K faisceaux incidents 1, K familles de faisceaux défléchis 2, 3, 4, 5 dont le nombre croissant de positions possibles de déflexion angulaire en sortie de chaque étage de la cascade est visualisé sur la figure 1 b par des largeurs de traits croissantes pour chacune des K familles de faisceaux optiques défléchis. Si l'on appelle ligne l'ensemble des éléments intervenant successivement sur un faisceau (pas nécessairement rectiligne), ces barrettes regroupent des éléments homologues, c'est-à-dire les éléments de même nature et de même indice dans ces lignes. Dans la suite, les références numériques précitées désignent les éléments si il y a une seule ligne, ou tous les éléments de même nature et de même indice s'il y a plusieurs lignes.

Pour des raisons de simplification d'illustration , les figures 1a et 1b présentent des configurations de faisceaux lumineux incidents et défléchis situés dans le plan de la figure. En variante non représentée, les barrettes de la figure 1b peuvent être orientées en sorte de provoquer des déflexions dans un plan perpendiculaire au plan de la figure. L'invention peut encore se généraliser, dans certaines conditions, à des moyens de déflexion permettant de générer des faisceaux défléchis suivant différents plans de déflexion d'orientations quelconques. Elle peut aussi, comme nous l'avons déjà signalé, se généraliser à des configurations de faisceaux incidents 1 disposés en matrices, les moyens de déflexion et de conjugaison optique étant alors aussi composés d'éléments disposés en matrices de même configuration géométrique.

Le principe de l'invention peut être exploité avec des moyens de déflexion divers, même si, dans la suite, ces moyens de déflexion seront décrits comme étant du type miroir, ces miroirs étant uniques ou composés d'éléments miroirs disposés en barrettes ou en matrices.

Ainsi la figure 2 donne un exemple de réalisation du schéma de la figure 1a mettant en jeu un faisceau lumineux incident unique, avec une cascade de moyens de déflexion 10, 11, 12 et 13 de type micro-miroirs (appelés $M_1$, $M_2$, $M_3$, $M_4$) présentant 2 positions angulaires possibles avec une excursion angulaire $\Delta\theta$ (ces positions sont schématisées par des traits discontinus de part et d'autre de la position moyenne de chaque micro-miroirs, cette position moyenne n'étant donc pas ici l'une des positions possibles) et des moyens de conjugaison optique 20, 21, 22, de type micro-lentilles assurant les conjugaisons objet-image souhaitées entre les miroirs consécutifs avec les grossissements adéquats (dans ce cas particulier : égaux à 2). L'inclinaison $\varphi$ des micro-miroirs par rapport à la direction locale du chemin optique du faisceau (donc par rapport à des plans perpendiculaires aux faisceaux optiques incidents moyens du système) est ici choisie, par simplification du dessin, égale à 45°. Les faisceaux optiques moyens sont définis par les différentes directions prises par le faisceau optique incident au cours des réflexions successives quand les différents miroirs sont orientés suivant la positions moyenne schématisée en traits pleins sur cette figure 2 (le système optique en ligne de la figure 1a vaut donc $\varphi$=0.

Il est bien sûr possible de donner à cet angle $\varphi$ une quelconque valeur entre 0° et 90° choisie à partir de critères d'encombrement et de simplicité fixés par le constructeur pour la réalisation du module optique de déflexion.

Par ailleurs, la présente description est donnée pour l'essentiel dans le cas, simple à exploiter pratiquement, où les moyens déflecteurs ont un même nombre limité de positions angulaires $P_1$, $P_2$, $P_3$,... $P_I$... $P_N$ autour d'un axe de rotation donné (générant donc chacun, à partir d'un faisceau optique incident, un nombre identique de positions de déflexion angulaire), et où les excursions angulaires $\Delta\theta_1$, $\Delta\theta_2$ ... $\Delta\theta_I$ ...$\Delta\theta_N$ sont identiques (égales à $\Delta\theta$). Dans ce cas le grossissement des micro-lentilles entre deux moyens déflecteurs successifs est égal au nombre de positions $P_I$; ce grossissement est ainsi de 2 si tous les déflecteurs individuels ont 2 positions, est de 3 si tous les déflecteurs individuels ont 3 positions et ainsi de suite.

Mais les nombres de positions des déflecteurs individuels peuvent ne pas être tous identiques. Dans ce cas (en supposant où l'on souhaite néanmoins conserver l'équidistance entre les diverses positions angulaires possibles), il est possible de démontrer que la valeur des grossissements $G_{I,I+1}$ mis en jeu par chacun des éléments des moyens de conjugaison optique MCOI et nécessaire pour obtenir en sortie de chacun de ces éléments miroir des positions de déflexion angulaire non redondantes et équidistantes est égale à :

$$G_{I,I+1} = P_I * ( P_{I+1} - 1) / ( P_I - 1)$$

Sur la figure 2 , le nombre des positions angulaires $P_1$, $P_2$, $P_3$ ,.... $P_I$... prises par chaque miroir est égal à 2 ; les moyens de conjugaison optique MCOI désignés par 20, 21, 22 ont donc des grossissements égaux à 2 également. Une variante sera exposée à propos de la figure 11.

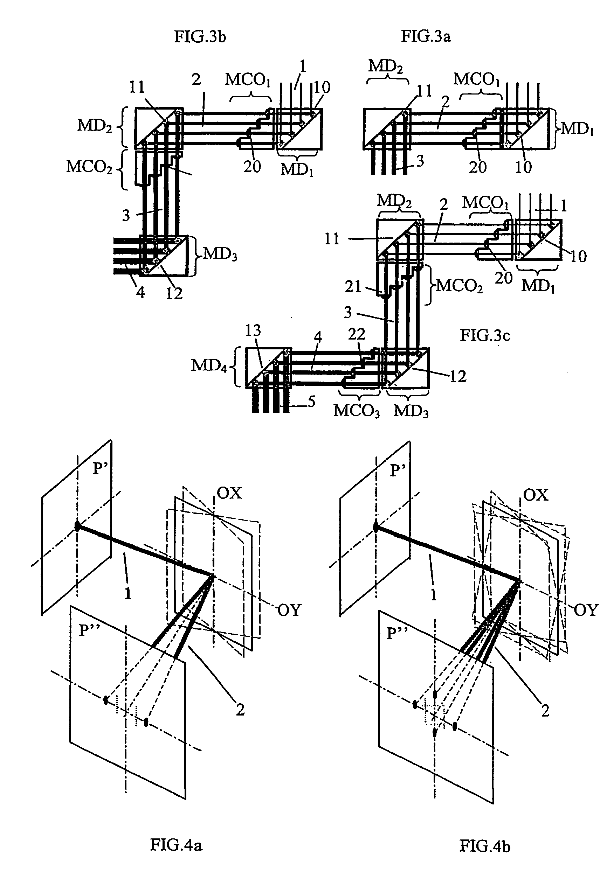

Les figures 3a, 3b et 3c donnent différents exemples de réalisation possibles de l'invention dans le cas de 4 faisceaux incidents 1 et avec un nombre croissant de moyens de déflexion $MD_1$, $MD_2$, $MD_3$, $MD_4$ désignés sous la référence numérique 10, 11, 12, 13. Ce nombre est respectivement égal à 2 (figure 3a), 3 (figure 3b) et 4 (figure 3c). Les moyens de conjugaison optiques $MCO_1$ $MCO_2$, $MCO_3$, respectivement au nombre de 1, 2 et 3 sur les figures en étant désignés sous les références numériques 20, 21 et 22, sont bien entendus aussi composés chacun de 4 éléments ; ils sont ici de type micro-lentilles.

Ces figures 3a, 3b et 3c donnent des exemples de réalisation possible de l'invention dans des configurations de structures repliées pour lesquelles l'angle φ est encore pris égal à 45°; les moyens de déflexion sont composés de barrettes de 4 micro-miroirs et les éléments de conjugaison optique sont des barrettes de micro-lentilles.

Sur ces figures 3a, 3b et 3c, la multiplication croissante des positions de déflexion angulaire des différents faisceaux défléchis 2 ,3 ,4 , 5... prises en sortie des différents moyens de déflexion $MD_1$, $MD_2$, $MD_3$, $MD_4$... est symbolisée par une largeur croissante de l'épaisseur des traits représentant ces différents faisceaux défléchis à partir des faisceaux initiaux 1.

Les moyens de conjugaison 20, 21, 22 sont représentés dans des positions correspondant à des grossissements $G_{I,I+1}$ égaux à 2 comme pour les figures 1 et 2 (cette valeur de $G_{I,I+1}$ est celle correspondant au cas de miroirs oscillants autour de 2 positions angulaires (voir la formule générale donnée plus haut)).

La position géométrique des différents éléments formant les moyens de conjugaison tient compte de l'inclinaison moyenne φ afin de préserver des conditions de conjugaison objet-image identiques pour chacune des différentes familles de rayons défléchis mis en jeu ; il faut pour cela que les centres des éléments composant les moyens de conjugaison (au nombre de 4 sur les figures 3a, 3b et 3c) soient alignés sur des droites inclinées d'un angle φ (45° sur les figures) par rapport à l'axe optique du système ; les axes optiques de chacun de ces éléments restant, comme représenté sur les figures, favorablement parallèles à cet axe optique pour minimiser les aberrations apportées par ces éléments.

Les figures suivantes permettent d'examiner plus en détails différents cas particuliers intéressants de l'invention mettant en jeu des micro-miroirs de différents types et de donner quelques exemples de configurations de positions de déflexion angulaire pouvant être obtenues.

Ainsi les figures 4a et 4b donnent une construction géométrique simple permettant d'appréhender comment un faisceau incident 1 est réfléchi par un miroir tournant pouvant prendre deux positions de rotation autour d'un axe de rotation unique OX (figure 4a) et par un miroir tournant pouvant prendre deux positions de rotation autour de deux axes de rotation OX et OY orthogonaux (figure 4b). Ces figures 4 peuvent bien entendu se généraliser à des configurations de miroirs pouvant prendre un nombre quelconque de positions angulaires autour d'axes de rotation quelconques, orthogonaux ou non.

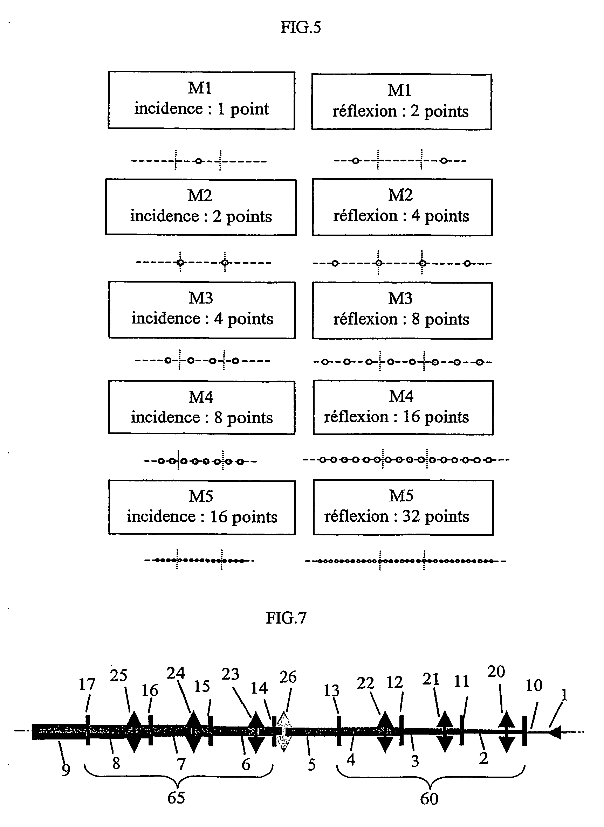

La figure 5 utilise la construction de la figure 4 pour montrer l'évolution des positions de déflexion angulaire d'un faisceau lumineux incident au cours des différentes réflexions sur des moyens de déflexion en cascade de type miroirs (au nombre de 5 dans cet exemple, M1 à M5) pouvant prendre chacun deux positions de rotation autour d'un axe OX. Chaque niveau montre les positions de déflexion immédiatement avant et après le moyen déflecteur considéré. Dans ce cas particulier et en choisissant des moyens de conjugaison optique travaillant avec des grossissements $G_{I,I+1}$ égaux à 2 (voir ci-dessus), on obtient respectivement en sortie des différents miroirs 2, 4, 8, 16 et 32 positions de déflexion angulaire disposées en ligne.

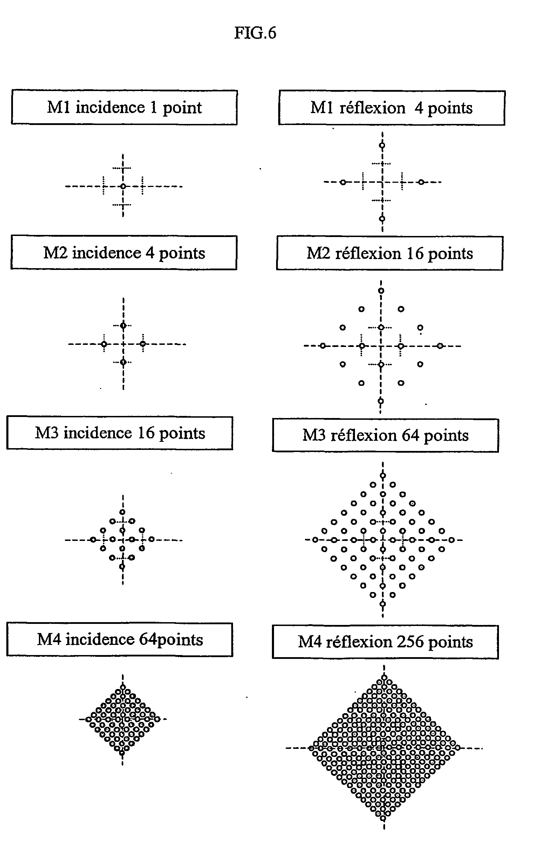

La figure 6 utilise le même formalisme et montre l'évolution des positions de déflexion angulaire d'un faisceau lumineux incident au cours des différentes réflexion sur des moyens de déflexion en cascade de type miroirs (cascade de 4 miroirs dans cet exemple, M1 à M4) pouvant prendre chacun deux positions de rotation autour de deux axes de rotation OX et OY orthogonaux. Dans ce cas particulier et toujours en choisissant des moyens de conjugaison optique travaillant avec des grossissements $G_{l,l+1}$ égaux à 2 , on obtient respectivement en sortie des différents miroirs 4, 16, 64 et 256 positions de déflexion disposées en matrice carrée (du fait de l'orthogonalité des axes et des valeurs d'excursion angulaire identiques suivant chacun des axes).

Quelques commentaires supplémentaires peuvent être faits à propos de ces figures.

**5.1. <u>Cascade de miroirs oscillant autour d'un axe commun OX.</u>**

C'est le cas de la figure 2 avec une cascade de moyens de déflexion de type micro-miroirs composés d'éléments miroirs 10, 11, 12, 13... oscillant autour d'axes $OX_1$, $OX_2$, $OX_3$,... $OX_l$,... $OX_L$ parallèles à une direction commune OX perpendiculaire au plan de la figure.

Le faisceau incident 1 est défléchi par les éléments miroirs 10 suivant $P_1$ positions de déflexion angulaire équidistantes ($P_1$ = 2 sur la figure 2) séparées angulairement de la valeur $\delta\alpha_1$ ($\delta\alpha_1 = 2 * \Delta\theta_1 / (P_1 - 1) = 2 * \Delta\theta / (P_1 - 1)$ = $2 * \Delta\theta$ dans le cas particulier de la figure 2) et situées dans un plan perpendiculaire à OX. Ces $P_1$ faisceaux 2 optiquement défléchis par les élément miroir 10 sont conjugués par les éléments 20 des moyens de conjugaison $MCO_1$ et imagés avec le grossissement $G_{1,2}$ sur les éléments miroirs 11 du second moyen de déflexion $MD_2$ pouvant prendre $P_2$ positions angulaires de telle façon que :

$$G_{1,2} = P_1 * (P_2 - 1)/(P_1 - 1)$$

Chaque faisceau potentiellement défléchi par les éléments miroir 10 (« potentiellement » car les miroirs ne prennent qu'une seule position à la fois) peut alors être défléchi suivant $P_2$ positions par les éléments miroirs 11.

Les éléments miroirs 11 fournissent donc potentiellement $P_1*P_2$ faisceaux optiques défléchis équidistants angulairement du fait de la valeur du grossissement $G_{1,2}$ choisi, et situés dans le même plan perpendiculaire à OX.

Ces positions de déflexion sont toutes différentes et le schéma de la figure 2 montre clairement que les moyens de conjugaison optiques entre les couples de miroirs consécutifs de la cascade ont bien deux fonctions essentielles :

- assurer la fonction d'imagerie nécessaire à la cascadabilité du système (cette fonction est assurée quelque soient les grossissements $G_{l,l+1}$ choisis).
- assurer l'unicité et l'équidistance des différentes positions de déflexion angulaire grâce au choix particulier des grossissements $G_{l,l+1}$.

De même les éléments miroirs 12 du troisième moyen de déflexion M3 donneront

$P_1 * P_2 * P_3$ faisceaux optiques défléchis potentiels équidistants angulairement, et ainsi de suite ; les éléments miroirs du $l^{ième}$ moyens de déflexion MI donnant $P_1* P_2 * P_3 *...P_l = P_{Tl}$ faisceaux défléchis potentiels équidistants angulairement et les éléments du dernier moyens de déflexion MN de la cascade donnant $P_1 * P_2 * P_3*...P_l *... P_N = P_{TN}$ faisceaux défléchis potentiels situés dans le même plan perpendiculaire à OX et équidistants angulairement dans la mesure où les différents grossissements $G_{l,l+1}$ mis en jeu dans la relation objet-image entre les éléments miroirs des moyens de déflexion consécutifs $M_l$ et $M_{l+1}$, sont égaux à la valeur donnée précédemment :

$$G_{l,l+1} = P_l * (P_{l+1} - 1) /(P_l - 1)$$

L'écart angulaire $\delta\alpha_N$ entre les différentes positions angulaires en sortie des éléments miroirs du moyen de déflexion $M_N$ est égal (le symbole $\Pi$ désignant le produit des valeurs du terme considéré pour les diverses valeurs de l'indice de ce terme) à :

$$\delta\alpha_N = \delta\alpha_1/ \Pi_1 \rightarrow_{N-1} (G_{l,l+1}) = \delta\alpha_1 * \Pi_1 \rightarrow_{N-1} ((P_l - 1)/ P_l) *(P_{l+1} - 1))$$

tandis que l'excursion angulaire $\Delta\alpha_N$ totale est égale à :

$$\Delta\alpha_N = ((\Pi_1 \rightarrow_N P_I) - 1) * \delta\alpha_N$$

Un cas particulier intéressant est celui où le nombre de positions angulaires $P_1$, $P_2$, $P_3$, ...$P_I$,... $P_N$ est identique pour chacun des micro-miroirs mis en jeu est égal à P. Dans ce cas :

$$G_{I,I+1} = P = \text{constante}$$

le nombre de positions angulaires en sortie des éléments du $N^{\text{ième}}$ moyen de déflexion est $P^N$, l'écart angulaire $\delta\alpha_N$ entre les différentes positions angulaires est :

$$\delta\alpha_N = \delta\alpha_1 / P^{N-1} = 2 * \Delta\theta / (P^{N-1} * (P-1))$$

l'excursion angulaire totale $\Delta\alpha_N$ est :

$$\Delta\alpha_N = (P^N - 1) * \delta\alpha_N = 2 * \Delta\theta * (P^N - 1) / (P^{N-1} * (P-1))$$

soit :

$$\Delta\alpha_N = 2 * \Delta\theta * P /(P-1) - 2 * \Delta\theta / (P^{N-1} * (P-1))$$

valeur qui tend vers $2 * \Delta\theta * P /(P-1)$ quand N devient grand.

Pour bien comprendre l'évolution d'un rayon incident à travers la cascade de miroirs, il est intéressant d'utiliser la construction géométrique donnée sur la figure 4a qui montre comment un faisceau optique incident 1 se transforme en deux faisceaux défléchis 2 par une réflexion sur un miroir pouvant prendre deux positions (représentées par des tirets) autour d'un axe de rotation OX (le cas d'un miroir à deux fois deux positions autour de deux axes orthogonaux de rotation OX et OY (figure 4b) sera commenté plus loin).

En considérant les intersections des faisceaux incidents et réfléchis par des plans perpendiculaires P' et P" à l'axe du système optique situés respectivement de part et d'autre et à égale distance du miroir, on peut facilement visualiser l'évolution des rayons lumineux au cours des différentes réflexions sur les miroirs de la cascade. Dans cette représentation la figure des positions défléchies (trace des faisceaux défléchis sur le plan P") se déduit de la figure des positions incidentes (trace des faisceaux incidents sur le plan P') par symétrie autour des différents axes de rotation. Dans l'exemple simple de la figure 4a, le faisceau incident 1 donne 2 faisceaux défléchis 2 par le miroir $M_1$ dont les traces sur le plan P" sont alignées parallèlement à OY (dans le cas de la figure 4b le faisceau incident 1 donne 4 (deux fois 2) faisceaux défléchis 2 par le miroir M'$_1$ dont les traces sur le plan P" sont alignés parallèlement à OX et à OY respectivement).

Dans cette représentation, la conjugaison optique de grossissement $G_{I,I+1}$ entre deux miroirs consécutifs $M_I$ et $M_{I+1}$ se traduit par un grandissement $1/G_{I,I+1}$ sur les valeurs prises par les positions de déflexion angulaire ; les figures des positions défléchies par un miroir MI et celle des positions incidentes sur le miroir suivant $M_{I+1}$ sont donc elles aussi dans le rapport $1/G_{I,I+1}$

La figure 5 donne l'exemple, dans cette représentation, de l'évolution des différentes figures prises par les traces des faisceaux incidents (sur des plans de type P') et défléchis (sur des plans de type P") en entrée et en sortie de différents miroirs uniaxes (de type $M_1$) d'une cascade pour laquelle N = 5 et P = 2, ce qui est une configuration particulièrement intéressante.

Les principaux paramètres de déflexion prennent alors les valeurs suivantes que l'on peut retrouver sur la figure 5 :

- nombre de faisceaux optiques défléchis : $P^N = 2^N = 32$ pour N=5
- écart angulaire entre les positions de déflexion des faisceaux $\delta\alpha_N = 2*\Delta\theta /2^{N-1} = \Delta\theta /8$
- excursion angulaire totale $\Delta\alpha_N = 31 *\Delta\theta / 8$ ; $\Delta\alpha_n \rightarrow 4 * \Delta\theta$ quand $N \rightarrow \infty$

Dans le cas de 3 positions (cas où P = 3, non illustré par une figure), les mêmes paramètres deviennent :

- nombre de faisceaux optiques défléchis $P^N = 3^N = 243$ pour N = 5
- écart angulaire entre les positions de déflexion des faisceaux $\delta\alpha_N = \Delta\theta/3^{N-1} = \Delta\theta/81$
- excursion angulaire totale $\Delta\alpha_N = 242 * \Delta\theta / 81$ ; $\Delta\alpha_N \rightarrow 3 * \Delta\theta$ quand $N \rightarrow \infty$

## 5.2. Cascade de miroirs oscillant autour de deux axes perpendiculaires de rotation OX et OY

Si chacun des éléments miroirs MI peut osciller suivant deux axes favorablement perpendiculaires $OX_I$ et $OY_I$ (chacun des axes de rotation étant parallèle respectivement à OX et OY), on obtient une répartition des positions de déflexion angulaires suivant deux axes perpendiculaires. Cette nouvelle configuration, qui correspond au schéma de réflexion par des miroirs $M_1'$ illustré par la figure 4b, permet, pour un nombre donné N de moyens de déflexion dans la cascade, d'augmenter considérablement le nombre de positions potentiellement accessibles et en même temps de disposer d'une répartition matricielle de positions de déflexion angulaire à 2 dimensions.

Cette configuration est particulièrement intéressante car on obtient en sortie de chaque élément miroirs une matrice (carrée si les excursions angulaires suivant les deux axes de rotation perpendiculaires sont identiques) de positions de déflexion angulaire. Il est à noter que la matrice des positions obtenues a une forme de losange, dont il vient d'être précisé qu'elle peut être un carré dans le cas précité, dont les côtés sont inclinés par rapport aux projections des axes OX et OY.

Cette configuration est particulièrement attractive pour de nombreuses applications. Elle est illustrée par la figure 6 qui donne comme précédemment l'évolution des positions des différents faisceaux optiques incidents et défléchis en entrée et en sortie de chaque miroir à quatre positions de rotation (deux positions suivant les axes $OX_I$ parallèles à OX et deux positions suivant les axes $OY_I$ parallèle à OY) de la cascade.

En sortie des éléments miroirs du N$^{\text{ième}}$ moyen de déflexion de la cascade, on obtient $4^N$ positions de déflexion angulaire réparties suivant une matrice ($2^N*2^N$) et dont les principaux paramètres suivant les deux axes perpendiculaires sont donnés par les formules précédentes pour P = 2.

On obtient ainsi :

pour N = 3 : 64 positions de déflexion potentielles (au lieu de 8 dans le cas de miroirs uniaxes).
pour N = 4 : 256 positions au lieu de 16, et
pour N = 5 : 1024 positions au lieu de 32.

## 5.3. Cascade de miroirs uniaxes permettant d'obtenir une matrice de positions de déflexions angulaires

Les matrices de $2^N * 2^N$ précédentes peuvent aussi être obtenues par deux cascades successives d'éléments miroirs oscillant autour d'un seul axe de rotation et présentant seulement deux positions de déflexion. Il faut pour cela disposer la direction commune des axes de la première cascade de N moyens de déflexion composés d'éléments miroirs uniaxes perpendiculairement à la direction commune des axes de la seconde cascade formée également de N moyens de déflexion composés d'éléments miroirs uniaxes.

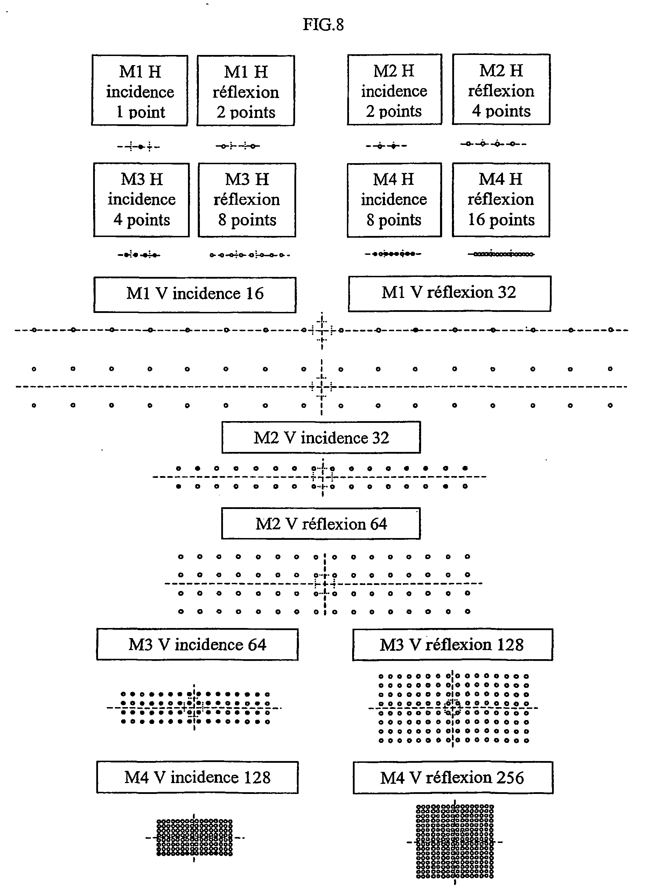

Cette configuration est représentée schématiquement figure 7 .

Celle-ci montre ainsi un schéma d'architecture avec une première cascade 60 de miroirs 10, 11, 12 et 13 pouvant prendre deux positions de rotation autour d'un axe OX unique suivi d'une seconde cascade 65 de miroirs 14, 15, 16 et 17 pouvant prendre deux positions de rotation autour d'un axe OY orthogonal à OX. Cette architecture permet d'obtenir des figures de déflexion équivalentes à celles d'une cascade de miroirs pouvant prendre chacun deux positions de rotation autour de deux axes de rotation OX et OY orthogonaux (cas représenté figure 6) mais met en jeu un nombre total de miroirs plus élevé.

Elle utilise, outre les moyens de conjugaison optique 20, 21, 22 et 23, 24, 25 nécessaires pour le bon fonctionnement de chaque cascade, un moyen de conjugaison optique supplémentaire 26 assurant une relation objet-image entre le dernier moyen de déflexion de la première cascade et le premier moyen de déflexion de la seconde cascade avec un grossissement $G_L$ permettant de rendre les figures de déflexion symétriques quand les deux cascades 60 et 65 sont identiques.

La première cascade de N moyens de déflexion (composée pour simplifier chacun d'éléments miroirs uniques 10, 11, 12, 13... en ligne), que l'on peut nommer « horizontale H » pour faciliter la compréhension, donne $2^N$ positions de déflexion angulaire dans la direction horizontale (de façon similaire au cas de la figure 5) ; la seconde cascade de N moyens de déflexion (composée pour simplifier chacun d'éléments miroirs uniques 14, 15, 16, 17... en ligne), que l'on peut nommer « verticale V » multiplie alors ces $2^N$ positions par $2^N$ suivant la direction verticale, donnant ainsi la matrice de ($2^N*2^N$) positions de déflexion angulaire recherchées.

Il faut cependant prendre garde au fait que dans la configuration précédente le grandissement angulaire total introduit par l'ensemble des moyens de conjugaison 20, 21, 22 dans le sens horizontal sera $1 / 2^{2 * (N-1)}$ alors qu'il ne sera que de $1 / 2^{N-1}$ dans le sens vertical où il n'est introduit que par les moyens de conjugaison 23, 24 et 25, ce qui conduit à la formation d'une matrice de positions de déflexion dissymétrique avec un rapport de forme égal à $2^{N-1}$, ce qui peut se révéler peu intéressant dans certaines applications, pour les applications de routage optique en particulier.

Toutefois, ce point peut être contourné par l'introduction entre les deux cascades de miroirs « H » et « V » de moyens de conjugaison optique permettant de rattraper cette dissymétrie.

C'est pour cette raison qu'il est décrit, à la figure 7, de prévoir un moyen 26 pour conjuguer optiquement les éléments miroirs du dernier moyen de déflexion de la première cascade (dans l'exemple de la figure 7 : le micro-miroir 13) avec les éléments miroirs du premier moyen de déflexion de la seconde cascade (dans l'exemple de la figure 7 : le micro-miroir 14) ;le moyen de conjugaison optique de liaison 26, dont chacun des éléments réfractifs (de type micro-lentilles) où réflectifs (de type micro-miroirs) assure un grossissement spatial $G_L = 1/ 2^{N-1}$ (et donc le grandissement angulaire $2^{N-1}$ recherché).

La configuration des positions angulaires de déflexion obtenue à l'entrée et à la sortie de chaque moyen de déflexion est illustrée à la figure 8 où les miroirs de la cascade horizontale sont dénommés M1 H, M2 H, M3 H et M4 H et les miroirs de la cascade verticale sont dénommés M1 V, M2 V, M3 V et M4 V; elle donne bien une matrice de positions de déflexion angulaire similaire à celle de la figure 6, mais avec des miroirs uniaxes identiques à ceux de la figure 4a plus simples à réaliser technologiquement. Il peut être noté que les côtés de la matrice obtenue sont, à la différence de ce qui est représenté à la figure 6, parallèles aux axes OX et OY.

Par contre, elle nécessite pour obtenir des complexités (nombre de positions de déflexion angulaire) identiques, un nombre double de moyens de déflexion par rapport à la solution à deux axes de rotation des figures 5 et 6 :

- 6 moyens de déflexion au lieu de 3 (3 moyens de déflexion « H » et 3 moyens de déflexion « V ») pour avoir 64 positions de déflexion angulaire ($2^3*2^3$ dans le premier cas, $4^3$ dans le second).
- 8 moyens de déflexion au lieu de 4 (4 « H » et 4 « V ») pour avoir 256 positions de déflexion ($2^4*2^4$ dans le premier cas, $4^4$ dans le second).

## 5.4. Généralisation

Il existe sur la base du principe de l'invention de nombreuses configurations possibles qui ne peuvent pas toutes être décrites ici en détail.

On peut cependant citer la configuration utilisant une cascade de moyens de déflexion composés de miroirs oscillant autour de deux systèmes d'axes de rotation orthogonaux orientés à 45° l'un de l'autre et présentant 3 positions de déflexion possibles autour de chacun des axes (par exemple une position de référence et deux positions extrêmes de part et d'autre de cette position de référence.

Si les excursions angulaires suivant les deux systèmes d'axes perpendiculaires sont dans le rapport $\sqrt{2}$, on obtient en sortie du $N^{ième}$ miroirs $9^N$ positions de déflexion angulaire, ce qui conduit à une complexité de 81 pour une cascade de seulement 2 moyens de déflexion et de 729 pour une cascade de 3 moyens de déflexion, donc très supérieure, à nombre de miroirs équivalent, aux complexités précédentes.

Par ailleurs, par simplification, nous avons privilégié dans les exemples donnés les configurations de positions de déflexion matricielles obtenues à partir de moyens de déflexion composés d'éléments présentant des positions de rotation autour d'axes orthogonaux et les mêmes paramètres de rotation autour de chacun des axes ; il est bien sûr possible de réaliser des configurations matricielles de formes dissymétriques (rectangles, losanges...) en choisissant des axes non orthogonaux et/ou des paramètres de rotation de positions différents (excursion angulaire $\Delta\theta$ ou nombre de positions angulaires) suivants les différents axes de rotation mis en jeu.

## 5.5. Repliement du système

Les figures 2 et 3a-c montrent des cascades de moyens de déflexion inclinés à 45° par rapport aux axes optiques du système ; bien entendu l'angle d'inclinaison peut être différent et prendre des valeurs $\varphi$ quelconques qui doivent seulement être en accord avec les contraintes dimensionnelles liées d'une part à la taille des éléments optiques mis en jeu et d'autre part à l'encombrement total souhaité pour le dispositif.

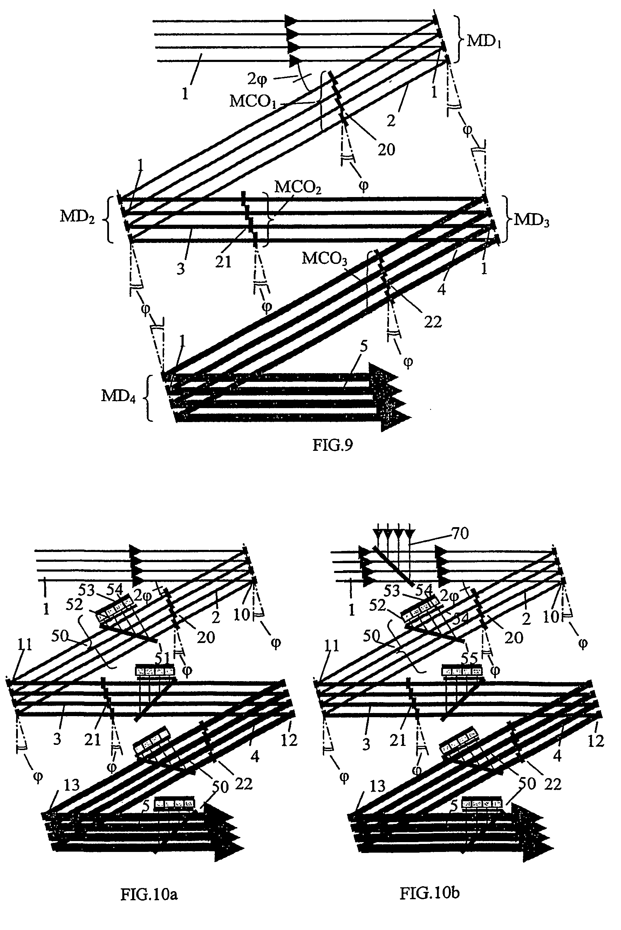

La figure 9 illustre un module utilisant une cascade de moyens de déflexion 10, 11, 12 et 13 à 4 éléments, dont les différents éléments sont inclinés d'un angle $\varphi$ quelconque par rapport à des plans perpendiculaires à l'axe optique du système. A chaque réflexion miroir l'axe optique du système tourne d'un angle 2 $\varphi$. Pour respecter une parfaite symétrie de fonctionnement entre les différents éléments, et entre les différentes falimmes de rayons lumineux défléchis, dans le cas de dispositifs en barrettes ou en matrices, les moyens de conjugaison sont avantageusement inclinés globalement du même angle φ ; l'axe optique de chacun des éléments composant les différents moyens de conjugaison restant favorablement parallèle à l'axe optique du système afin de minimiser les aberrations optiques.

### 5.6. <u>Contrôle de fonctionnement</u>

Il est intéressant, comme pour tout système, de disposer d'un élément de contrôle 50 permettant de s'assurer que la fonction souhaitée est bien assurée.

Dans le dispositif de l'invention , il peut ainsi s'agir de vérifier que les positions de déflexion angulaire prévues en sortie du dispositif sont effectivement atteintes. En pratique, afin d'avoir une information complète sur l'origine d'une défaillance potentielle, il est intéressant de pouvoir vérifier l'état de fonctionnement du dispositif à chaque étage de la cascade de miroirs.

Ce contrôle peut être effectué, comme le montre la figure 10a, en prévoyant, après chaque moyen de déflexion, des moyens de contrôle 50 des positions angulaires prises par chacun des éléments de déflexion.

Plus précisément, ce contrôle est effectué dans le cas de la figure 10a en prélevant une petite partie des rayons défléchis (donc de la puissance lumineuse des faisceaux à l'endroit considéré) par les différents éléments composant le moyen de déflexion à contrôler, grâce à une lame séparatrice 51 et en projetant l'ensemble de ces rayons sur un détecteur de positions 53 (constitué par exemple d'une barrette ou d'une matrice de photodétecteurs de type CMOS) grâce à un module optique de projection 52 de tout type connu approprié (par exemple constitué d'une barrette ou d'une matrice de micro-lentilles ou de micro-miroirs adaptés). La position des photodétecteurs 53 est avantageusement choisie au niveau ou au voisinage du plan focal des éléments du système optique de projection, afin de réaliser de manière simple une correspondance biunivoque entre chacune des positions de déflexion angulaire et la distribution spatiale des points lumineux reçus sur le photodétecteur.

La distribution des points « image » sur le détecteur de position 53 est avantageusement choisie en sorte d'être homothétique de la distribution des positions de déflexion angulaire à contrôler. Un système optique de grandissement (réduction ou agrandissement) d'image 54 est éventuellement associé à cet effet au module optique de projection 52 pour adapter les dimensions des moyens de déflexion du module à celles du détecteur de position 53.

Le nombre de points de la matrice de photodétecteur permettant de contrôler l'état du module en sortie d'un étage de la cascade est de préférence au moins être égal au nombre total des positions de déflexion angulaire potentiellement générées à l'étage de la cascade considéré. Par exemple, pour l'étage numéro I compris entre les moyens de déflexion $MD_I$ et $MD_{I+1}$, la cascade de miroirs génère $P_{TI}$ positions angulaires ($P_{TI} = P_1{}^* P_2{}^*... P_I$):

- pour une cascade de moyens de déflexion à élément unique, il faut disposer de $P_{TI}$ points image.
- pour une cascade de moyens de déflexion composés de barrettes de K éléments, il faut disposer de $K^*{}_{PTI}$ points image.
- pour une cascade de moyens de déflexion composés de matrices de K*K' éléments, il faut disposer de $K^*K'^*{}_{PTI}$ points image.

Une autre solution de contrôle des positions de déflexion angulaire, utilisant des moyens de photodétection et un système optique d'imagerie similaires au cas précédent, peut consister à utiliser des faisceaux optiques externes 70 superposés aux faisceaux optiques du module comme le montre la figure 10b qui illustre un module possédant, après chaque moyen de déflexion, des moyens de contrôle 50 de contrôle des positions angulaires prises par chacun des éléments de déflexion en utilisant un prélèvement partiel de la puissance lumineuse de faisceaux optiques annexes. Ces faisceaux externes (ou annexes) ont avantageusement une longueur d'onde différente de celle des faisceaux incidents ; il sont dirigés vers les moyens de contrôle par des lames séparatrices 55 favorablement dichroïques. Les éléments de ces moyens de contrôle sont similaires à ceux de la figure 10a.

Bien entendu le contrôle du module peut ne pas être effectué en sortie de chaque moyen de déflexion $MD_I$ comme présenté sur les figures 10a et 10b mais par exemple seulement en sortie du dernier moyen de déflexion $MD_N$.

On peut noter que les exemples qui viennent d'être présentés, à titre préféré, décrivent :

- un module mettant en jeu une cascade de M moyens de déflexion de faisceaux optiques $MD_1$, $MD_2$, $MD_3$,... $MD_I$,... $MD_N$ ne pouvant prendre chacun qu'un nombre limité de configurations $P_1$, $P_2$ , $P_3$... $P_I$... $P_N$ de telle façon que :

- chaque configuration $P_1$, $P_2$ , $P_3$,... $P_I$... $P_N$ permet de défléchir un faisceau optique incident quelconque suivant le même nombre limité de positions de déflexion angulaire, favorablement équidistantes, $PDA_1$, $PDA_2$, $PDA_3$ ....$PDA_I$ ... $PDA_N$.
- chaque moyen de déflexion $MD_I$ de la cascade (I allant de 1 à N-1) est conjugué optiquement avec le moyen de déflexion $MD_{I+1}$ qui le suit par des moyens de conjugaison optiques $MCO_I$ réfractifs (lentilles) ou réflectifs (miroirs) mettant en jeu un grossissement $G_{I,I+1}$.

- la valeur du grossissement $G_{I,I+1}$ est calculée à partir des différents paramètres de déflexion de façon à obtenir, à partir d'un faisceau incident initial, la multiplication du nombre de faisceaux défléchis suivant des positions de déflexion distinctes et favorablement équidistantes à chaque nouvel étage de la cascade (et donc en sortie des différents moyens de déflexion $MD_1$, $MD_2$, $MD_3$,... $MD_I$,... $MD_N$).

L'invention peut aisément se généraliser à des moyens de déflexion $MD_1$, $MD_2$, $MD_3$... $MD_I$... $MD_N$ formés d'un nombre K quelconque d'éléments regroupés en barrettes ou en matrices dans lesquelles les éléments correspondants de deux moyens de déflexion consécutifs $MD_I$ et $MD_{I+1}$ sont conjugués optiquement par des barrettes ou des matrices de moyens de conjugaison optique $MCO_I$ réfractifs ou réflectifs de tailles et de complexité équivalentes à celles des moyens de déflexion.

Le grossissement optique entre les éléments correspondants de deux barrettes ou de deux matrices de moyens de déflexion consécutives sera alors aussi égal à $G_{I,I+1}$ dans la mesure où chacun des éléments composant les barrettes ou les matrices de la cascade a les mêmes caractéristiques que celles définies dans le cas de moyens de déflexion uniques.

L'invention permet dans ce cas la multiplication croissante pour chacun des K faisceaux optiques incidents du nombre de positions de déflexion angulaire distinctes potentielles prises en sortie de chaque étage de la cascade et de former ainsi K familles de faisceaux défléchis identiques.

- un module du type précité, dans lequel les éléments de déflexion en cascade $MD_1$, $MD_2$,... $MD_I$,... $MD_N$ sont composés d'éléments de déflexion (10, 11, 12,13...) de type miroir unique ou disposés par exemple en barrettes ou en matrices pouvant prendre chacun, respectivement, $P_1$, $P_2$,... $P_I$,... $P_N$ configurations de positions angulaires distinctes permettant de générer un nombre équivalent de positions de déflexion angulaire distinctes $PDA_1$, $PDA_2$,... $PDA_I$,... $PDA_N$, chacune séparée angulairement par des valeurs respectives $\delta\theta_1$, $\delta\theta_2$,... $\delta\theta_I$,... $\delta\theta_N$ autour d'au moins une famille d'axes de rotations $OX_1$, $OX_2$,...$OX_I$...,$OX_N$ de direction commune, les excursions angulaires totales de chacun des éléments et répondant aux caractéristiques suivantes :

- Les excursions angulaires totales $\Delta\theta_1$, $\Delta\theta_2$ ... $\Delta\theta_I$ ... $\Delta\theta_N$ présentées par chacun des éléments des moyens de déflexion $MD_1$, $MD_2$ ... $MD_I$ ... $MD_N$ autour d'une même famille d'axes sont identiques et égales à $\Delta\theta$, ce qui implique :

$$(P_1-1) * \delta\theta_1 = (P2-1) * \delta\theta_2 = ....(P_1-1) * \delta\theta_I = .... (P_N-1) * \delta\theta_N = constante = \Delta\theta$$

- Les grossissements $G_{I,I+1}$ permettant la conjugaison deux à deux des différents éléments de deux moyens de déflexion consécutifs $MD_I$ et $MD_{I+1}$ sont égaux à :

$$G_{I,I+1} = P_I * (P_{I+1}-1)/(P_I -1)$$

Le dispositif ainsi décrit permettant, dans le cas d'une même famille d'axes de rotation uniques, d'obtenir en sortie de n'importe lequel des éléments des moyens de déflexion MDI de la cascade, un nombre $P_1 * P_2 ... P_I *...P_N$ positions de déflexions angulaires distinctes, toutes équidistantes et disposées linéairement suivant un axe perpendiculaire à cette direction commune.

En particulier en sortie des éléments du dernier moyen de déflexion $MD_L$, le nombre total $P_{TN}$ de positions de déflexion angulaire distinctes, équidistantes angulairement et disposées linéairement sera :

$$P_{TN} = \prod_{(I=1 \to N)} P_I$$

- un module optique du type précité dans lequel les éléments 10, 11, 12, 13... des moyens de déflexion $MD_1$, $MD_2$,... $MD_I$.... $MD_N$ présentent chacun deux positions angulaires distinctes séparées d'un angle $\delta\theta_X$ autour d'axes parallèles à une direction commune OX et deux positions angulaires distinctes séparées d'un angle $\delta\theta_Y$ (favorablement égal à $\delta\theta_X$) autour d'axes parallèles à une direction commune OY favorablement perpendiculaire à OX et tel que les grossissements $G_{I,I+1}$ des différents éléments des moyens optiques $MCO_I$ permettant de conjuguer optiquement les éléments correspondants de deux moyens de déflexion consécutifs $MD_I$ et $MD_{I+1}$ soient tous égaux à 2 (formule générale de $G_{I,I+1}$ appliquée au cas particulier $P_I = P_{I+1} = 2$).

Le dispositif ainsi décrit permettant d'obtenir des configurations matricielles des figures de positions de déflexion angulaire et d'obtenir pour un nombre N donné de moyens de déflexion mis en jeu dans la cascade un plus grand nombre de positions de déflexion distinctes.

- un module optique du type précité caractérisé par la mise en série de deux cascades successives de moyens de déflexion $MD_1$, $MD_2$,... $MD_I$,... $MD_N$ dont les différents éléments 10, 11, 12, 13...... ne peuvent prendre des positions angulaires $P_1$, $P_2$,... $P_I$,... $P_N$ que suivant une direction commune unique et dans lesquelles la direction commune unique des axes de rotation de chacun des éléments des moyens de déflexion de la première cascade est choisi orthogonale à la direction commune des axes de rotation de chacun des éléments de moyens de déflexion de la seconde cascade.

Dans cette configuration les éléments du dernier moyen de déflexion de la première cascade seront conjugués optiquement avec les éléments correspondants du premier moyen de déflexion de la seconde cascade par un moyen de conjugaison optique de liaison 26 dont chacun des éléments présente un grossissement $G_L$ permettant de rendre symétrique la figure des positions de déflexion angulaire en sortie des éléments du dernier moyen de déflexion de la seconde cascade. Cette configuration permet avec des éléments de déflexion ne pouvant osciller que suivant un axe de rotation unique de générer des configurations matricielles des figures de positions de déflexion angulaire analogues au dispositif de la revendication 3.

- un module optique du type précité dans lequel le nombre de positions angulaires distinctes $P_1$, $P_2$,... $P_I$,.. $P_N$ pouvant être prises par les différents éléments des moyens de déflexion $MD_1$, $MD_2$,... $MD_I$,... $MD_N$ autour des différents axes de rotation de direction commune $OX_1$, $OX_2$,...$OX_I$,...,$OX_N$ est égal à 2 ou 3, les grossissements $G_{I,I+1}$ pouvant alors prendre les différentes valeurs suivantes :

$$G_{I,I+1} = P_I *( P_{I+1} -1) /( P_I -1) = 2 \text{ pour } P_I = 2 \text{ et } P_{I+1} = 2$$

$$G_{I,I+1} = P_I *( P_I+1 -1) /( P_I -1) = 3 \text{ pour } P_I = 3 \text{ et } P_{I+1} = 3$$

$$G_{I,I+1} = P_I *( P_{I+1} -1) /( P_I -1) = 4 \text{ pour } P_I = 2 \text{ et } P_{I+1} = 3$$

$$G_{I,I+1} = P_I *( P_{I+1} -1) /( P_I -1) = 3/2 \text{ pour } P_I = 3 \text{ et } P_{I+1} = 2$$

- un module optique du type précité tel que les moyens de déflexion sont constitués de micro-miroirs orientables uniques, d'une barrette de K' micro-miroirs orientables ou d'une matrice de K' * K" micro-miroirs orientables permettant la multiplication du nombre de positions angulaires respectivement d'un faisceau optique incident unique ou de K' faisceaux optiques incidents parallèles (cas des barrettes de K' micro-miroirs) ou de K' * K' faisceaux optiques incidents parallèles (cas des matrices de K' * K" micro-miroirs), les micro-miroirs orientables uniques, les barrettes ou les matrices de micro-miroirs orientables pouvant être réalisés suivant les procédés de fabrication collective mis en jeu dans les micro-technologies.
- un module optique du type précité dans lequel les moyens de conjugaison optique $MCO_I$ associés à deux moyens de déflexion consécutifs $MD_I$ et $MD_{I+1}$, sont constitués d'éléments 20, 21, 22, 23.... de type micro-lentilles uniques (ou de micro-miroirs uniques), de barrettes ou de matrices de micro-lentilles (ou de micro-miroirs) quand les moyens de déflexions sont eux-mêmes constitués d'éléments 10, 11, 12, 13, 14...de type micro-miroirs orientables uniques, de barrettes ou de matrices de micro-miroirs orientables, les micro-lentilles (ou les micro-miroirs) uniques ou disposés en barrettes ou en matrices pouvant être réalisés suivant les procédés de fabrication collective mis en jeu dans les micro-technologies.
- un module optique du type précité dans lequel les moyens de déflexion $MD_I$ mis en jeu sont globalement inclinés par rapport aux axes optiques du dispositif d'un angle φ qui peut être choisi égal à 45°.
- un module optique du type précité dans lequel les moyens de déflexion $MD_I$ et de conjugaison optique $MCO_I$ groupés en barrettes ou en matrices sont globalement inclinés d'un même angle φ par rapport à l'axe optique général du dispositif mais pour lequel chacun des axes optiques des différents éléments 20, 21, 22, 23 ...composant les moyens de conjugaison reste parallèle à cet axe optique général pour minimiser les aberrations induites par ces différents éléments sur les différents faisceaux défléchis mis en jeu.

- un module optique du type précité dans lequel les positions de déflexion de chacun des éléments de déflexion sont contrôlées par des moyens de contrôle 50 utilisant :

  - des moyens de séparation spatiale 51 permettant de prélever une fraction de la puissance lumineuse des faisceaux optiques de signal défléchis par les différents moyens de déflexion,
  - des moyens optiques de projection 52 permettant de transformer de manière biunivoque les différentes positions de déflexion angulaire en autant de positions spatiales ; ces moyens optiques d'imagerie étant groupés suivant des configurations identiques à celles des moyens de déflexion (barrettes ou matrices d'éléments). Ils peuvent être dans certains cas associés à des moyens de grandissement d'image 54,
  - des moyens de détection 53 des positions spatiales ainsi formées comportant un nombre de points au moins égal au nombre total de positions angulaires générées au niveau de l'étage de contrôle considéré ; la configuration des points du photodétecteur étant homothétique de celle de l'ensemble des positions de déflexion angulaire à contrôler. Ces moyens de détection peuvent être favorablement des barrettes ou des matrices de photodétecteurs CMOS disponibles commercialement.

- un module dans lequel les moyens de contrôle 50 des positions de déflexion angulaire utilisent des faisceaux optiques annexes 70 de longueur d'onde favorablement différente de celle des faisceaux principaux, et superposés à ces derniers à l'aide de lames dichroïques 55.

Il a été indiqué que chaque élément de déflexion $MD_I$ est conjugué optiquement avec celui qui le précède par un élément de conjugaison de grossissement $G_{I-1,I}$.

Favorablement, chaque élément de conjugaison est composé de deux lentilles permettant d'obtenir les grossissements souhaités et disposées de façon confocale.

Ces deux lentilles ont des focales dont le rapport est égal au grossissement souhaité $G_{I-1,I}$.

A titre d'exemple, dans le cas de moyens de déflexion de type micro-miroir à deux positions, le grandissement $G_{I-1,I}$ est égal à 2 et le rapport des focales des deux lentilles sera égal aussi à 2 avec une disposition confocale illustrée par la figure 11.

D'une façon générale, les lentilles utilisées dans le module de l'invention sont de préférence des micro-lentilles réalisées suivant les procédés de fabrication, généralement collective, mise en jeu dans les micro-technologies.

## Revendications

1. Module de déflexion optique adapté à générer une pluralité de positions angulaires pour au moins un faisceau optique incident, ce module comportant pour chaque faisceau optique une ligne comportant :

   - une pluralité de N éléments de déflexion ($MD_1$, $MD_2$,... $MD_I$... $MD_N$) disposés en cascade et pouvant prendre chacun, respectivement, $P_1$, $P_2$,... $P_I$... ou $P_N$ configurations de déflexion angulaire distinctes autour d'au moins un axe donné, et
   - une pluralité de N-1 éléments de conjugaison optique ($MCO_1$, $MCO_2$ ,... $MCO_I$, ..., $MCO_{N-1}$) disposés chacun entre deux éléments de déflexion successifs en sorte de réaliser une conjugaison objet-image entre ces éléments de déflexion successifs.

2. Module selon la revendication 1 adapté à générer une pluralité de positions angulaires pour une pluralité de faisceaux optiques incidents, selon lequel il y a une ligne pour chaque faisceau optique incident, et les éléments de déflexion et les éléments de conjugaison optique de chaque ligne sont regroupés, avec les éléments homologues des autres lignes, au sein d'ensembles constitués par des barrettes.

3. Module selon la revendication 1 adapté à générer une pluralité de positions angulaires pour une pluralité de faisceaux optiques incidents, selon lequel il y a une ligne pour chaque faisceau optique incident, et les éléments de déflexion et les éléments de conjugaison optique de chaque ligne sont regroupés, avec les éléments homologues des autres lignes, au sein d'ensembles constitués par des matrices.

4. Module selon la revendication 2 ou la revendication 3, dont les éléments de déflexion regroupés au sein de chaque ensemble ont des nombres $P_1$, $P_2$,... $P_I$,... ou $P_N$ de configurations de déflexion angulaire distinctes qui sont identiques.

5. Module selon l'une quelconque des revendications 2 à 4, dont les éléments de déflexion ($MD_1$, $MD_2$,... $MD_I$... $MD_N$) disposés en cascade et pouvant prendre chacun, respectivement, $P_1$, $P_2$,... $P_I$... ou $P_N$ configurations de déflexion angulaire distinctes ont des axes donnés uniques et parallèles:

6. Module selon l'une quelconque des revendications 2 à 4, dont les éléments de déflexion ($MD_1$, $MD_2$,... $MD_I$... $MD_N$) disposés en cascade et pouvant prendre chacun, respectivement, $P_1$, $P_2$,... $P_I$... ou $P_N$ configurations de déflexion angulaire distinctes ont des axes donnés uniques parallèles à l'un ou l'autre de deux axes de référence (OX, OY).

7. Module selon l'une quelconque des revendications 2 à 4, dont les éléments de déflexion ($MD_1$, $MD_2$,... $MD_I$... $MD_N$) disposés en cascade et pouvant prendre chacun, respectivement, $P_1$, $P_2$,... $P_I$... ou $P_N$ configurations de déflexion angulaire distinctes ont chacun deux axes donnés parallèles à deux axes de référence (OX, OY).

8. Module selon l'une quelconque des revendications 1 à 7, **caractérisé en ce que** les configurations de déflexion angulaire distinctes sont équidistantes autour des axes donnés.

9. Module selon l'une quelconque des revendications 1 à 8, dans lequel les éléments de déflexion en cascade $MD_1$, $MD_2$,... $MD_I$... $MD_N$ peuvent prendre chacun, par basculement autour d'au moins l'axe donné, respectivement, $P_1$, $P_2$,... $P_I$... $P_N$ configurations de positions angulaires distinctes permettant de générer un nombre équivalent de déflexion angulaire distinctes chacune séparée angulairement par des valeurs respectives $\delta\theta_1$, $\delta\theta_2$,... $\delta\theta_I$, ... $\delta\theta_N$ autour d'au moins une famille d'axes de rotations $OX_1$, $OX_2$,...$OX_I$...,$OX_N$

10. Module selon la revendication 9, dont les familles d'axes de rotation sont de direction commune.

11. Module selon la revendication 9 ou la revendication 10, dans lequel les excursions angulaires totales de chacun des éléments de déflexion sont égales.

12. Module selon l'une quelconque des revendications 9 à 11, dans lequel les grossissements $G_{I, I+1}$ permettant la conjugaison deux à deux des différents éléments de déflexion consécutifs $MD_I$ et $MD_{I+1}$ sont égaux à :

$$G_{I,I+1} = P_I * ( P_{I+1} -1) /( P_I -1).$$

13. Module optique selon l'une quelconque des revendications 9 à 12, dans lequel les éléments de déflexion (10, 11, 12, 13...) présentent chacun deux positions angulaires distinctes séparées d'un angle $\delta\theta_X$ autour d'axes parallèles à une direction commune OX et deux positions angulaires distinctes séparées d'un angle $\delta\theta_Y$ autour d'axes parallèles à une direction commune OY et tel que les grossissements $G_{I,I+1}$ des différents éléments de conjugaisons optique sont tous égaux à 2.

14. Module selon la revendication 13, dans lequel l'angle $\delta\theta_Y$ est égal à $\delta\theta_X$.

15. Module selon la revendication 13 ou la revendication 14 , dans lequel l'axe OY est perpendiculaire à OX.

16. Module selon l'une quelconque des revendications 9 à 15, **caractérisé en ce que** les éléments de déflexion sont des miroirs orientables.

17. Module selon l'une quelconque des revendications 9 à 12, **caractérisé par** la mise en série de deux cascades successives dont les différents éléments de déflexion (10, 11, 12, 13......) ne peuvent prendre des positions angulaires $P_1$, $P_2$,... PI,... $P_N$ que suivant une direction commune unique et dans lesquelles la direction commune unique des axes de rotation de chacun des éléments de déflexion de la première cascade est choisi orthogonale à la direction commune des axes de rotation de chacun des éléments de déflexion de la seconde cascade.

18. Module selon l'une quelconque des revendications 9 à 17, dans lequel le nombre de positions angulaires distinctes $P_1$, $P_2$,... $P_I$,... $P_N$ pouvant être prises par les différents éléments de déflexion $MD_1$, $MD_2$,... $MD_I$,... $MD_N$ autour des différents axes de rotation de direction commune OX1, $OX_2$,...$OX_I$...,$OX_N$ est égal à 2 ou 3, les grossissements $G_{I,I+1}$ pouvant alors prendre les différentes valeurs suivantes :

$$G_{I,I+1} = P_I * (P_{I+1} - 1) / (P_I - 1) = 2 \text{ pour } P_I = 2 \text{ et } P_I + 1 = 2$$

$$G_{I,I+1} = P_I * (P_{I+1} - 1) / (P_I - 1) = 3 \text{ pour } P_I = 3 \text{ et } P_{I+1} = 3$$

$$G_{I,I+1} = P_I * (P_{I+1} - 1) / (_{PI} - 1) = 4 \text{ pour } P_I = 2 \text{ et } P_{I+1} = 3$$

$$G_{I,I+1} = P_I * (P_{I+1} - 1) / (P_I - 1) = 3/2 \text{ pour } P_I = 3 \text{ et } P_{I+1} = 2$$

19. Module selon l'une quelconque des revendications 1 à 18 dans lequel les éléments de déflexion comporte des micro-miroirs orientables réalisés suivant les procédés de fabrication collective mis en jeu dans les micro-technologies.

20. Module optique selon l'une quelconque des revendications 1 à 19 dans lequel les éléments de conjugaison optique associés à deux éléments de déflexion consécutifs comportent respectivement au moins une lentille.

21. Module optique selon la revendication 19, **caractérisé en ce que** chaque élément de conjugaison optique associés à deux éléments de déflexion consécutifs comporte au moins deux lentilles en configuration confocale dont le rapport des focales est égal au grossissement recherché entre les deux éléments.

22. Module optique suivant l'une quelconque des revendications 1 à 21 dans lequel les éléments de déflexion mis en jeu sont globalement inclinés par rapport à l'axe optique d'un angle φ choisi égal à 45°.

23. Module optique suivant l'une quelconque des revendications 1 à 22 dans lequel les éléments de déflexion et de conjugaison optique sont groupés en barrettes ou en matrices et sont globalement inclinés d'un même angle φ par rapport à l'axe optique général mais pour lequel chacun des axes optiques des différents éléments (20, 21, 22 , 23 ...) de conjugaison reste parallèle à cet axe optique général.

24. Module optique suivant l'une quelconque des revendications 1 à 23 dans lequel les positions de déflexion de chacun des éléments de déflexion sont contrôlées par un dispositif de contrôle (50) utilisant :

   - des éléments de séparation spatiale (51) permettant de prélever une fraction de la puissance lumineuse des faisceaux optiques de signal défléchis par les différents éléments de déflexion.
   - des éléments optiques de projection (52) permettant de transformer de manière biunivoque les différentes positions de déflexion angulaire en autant de positions spatiales, ces éléments optiques de projection étant groupés suivant des configurations identiques à celles des éléments de déflexion,
   - des éléments de détection (53) des positions spatiales ainsi formées comportant un nombre de points au moins égal au nombre total de positions angulaires générées au niveau de l'étage de contrôle considéré, la configuration des points du photodétecteur étant homothétique de celle de l'ensemble des positions de déflexion angulaire à contrôler.

25. Module selon la revendication 24, dans lequel les éléments optiques de projection sont associés à des éléments de grandissement d'image (54).

26. Module selon la revendication 24 ou la revendication 25, dans lequel les éléments de détection sont des barrettes ou des matrices de photodétecteurs CMOS.

27. Module selon l'une quelconque des revendications 24 à 26, dans lequel le dispositif de contrôle (50) des positions de déflexion angulaire utilise des faisceaux optiques annexes (70) de longueur d'onde favorablement différente de celle des faisceaux optiques de signal, et superposés à ces derniers à l'aide de lames dichroïques (55).

28. Module selon l'une quelconque des revendications 1 à 6, 9 à 12, 17, 19 à 27, **caractérisé en ce que** chaque élément de déflexion a un nombre de configurations de déflexion angulaire distinctes autour d'un axe donné égal à 2.

29. Module optique selon l'une quelconque des revendications 1 à 28, **caractérisé en ce qu'**il comporte en outre un élément de conjugaison supplémentaire disposé après le dernier élément de déflexion.

**Claims**

1. An optical deflection module designed to generate a plurality of angular positions for at least one incident optical beam, this module comprising, for each optical beam, a line comprising:

   - a plurality of N deflection elements $DM_1$, $DM_2$, ... $DM_i$, ... $DM_N$) placed in cascade and each able to adopt, respectively, $P_1$, $P_2$, ... $P_i$, ... or $P_N$ different angular deflection configurations about at least one given axis; and
   - a plurality of N-1 optical conjugation elements ($OCM_1$, $OCM_2$, ... $OCM_i$, ... $OCM_{N-1}$) each placed between two successive deflection elements so as to produce an object/image conjugate between these successive deflection elements.

2. The module as claimed in claim 1, designed to generate a plurality of angular positions for a plurality of incident optical beams, in which there is one row for each incident optical beam, and the deflection elements and the optical conjugation elements of each row are grouped together, with the homologous elements of the other rows, within entities consisting of linear arrays.

3. The module as claimed in claim 1, designed to generate a plurality of angular positions for a plurality of incident optical beams, in which there is one row for each incident optical beam, and the deflection elements and the optical conjugation elements of each row are grouped together, with the homologous elements of the other rows, within entities consisting of matrices.

4. The module as claimed in claim 2 or claim 3, the deflection elements grouped together within each entity of which have numbers $P_1$, $P_2$, ..., $P_i$, ... or $P_N$ of different angular deflection configurations that are identical.

5. The module as claimed in any one of claims 2 to 4, the deflection elements ($DM_1$, $DM_2$, ... $DM_i$, ... $DM_N$) of which, placed in cascade and each able to adopt, respectively, $P_1$, $P_2$, ... $P_i$, ... or $P_N$ different angular deflection configurations, have single parallel given axes.

6. The module as claimed in any one of claims 2 to 4, the deflection elements ($DM_1$, $DM_2$, ... $DM_i$, ... $DM_N$) of which, placed in cascade and each able to adopt, respectively, $P_1$, $P_2$, ... $P_i$, ... or $P_N$ different angular deflection configurations, have single given axes parallel to one or other of the two reference axes (OX, OY).

7. The module as claimed in any one of claims 2 to 4, the deflection elements ($DM_1$, $DM_2$, ... $DM_i$, ... $DM_N$) of which, placed in cascade and each able to adopt, respectively, $P_1$, $P_2$, ... $P_i$, ... or $P_N$ different angular deflection configurations, each have two given axes parallel to two reference axes (OX, OY).

8. The module as claimed in any one of claims 1 to 7, **characterized in that** the different angular deflection configurations are equidistant about the given axes.

9. The module as claimed in any one of claims 1 to 8, in which the deflection elements $DM_1$, $DM_2$, ... $DM_i$, ... $DM_N$ in cascade may each adopt, by tilting about at least one given axis, respectively, $P_1$, $P_2$, ... $P_i$, ... $P_N$ different angular position configurations making it possible to generate an equivalent number of different angular deflections, each separated angularly by respective values $\delta\theta_1$, $\delta\theta_2$, ... $\delta\theta_i$, ... $\delta\theta_N$ about at least one family of rotation axes $OX_1$, $OX_2$, ... $OX_i$ ..., $OX_N$.

10. The module as claimed in claim 9, the family of rotation axes of which have a common direction.

11. The module as claimed in claim 9 or claim 10, in which the total angular excursions of each of the deflection elements are the same.

12. The module as claimed in any one of claims 9 to 11, in which the magnifications $G_{i,i+1}$ allowing pairwise conjugation of the various consecutive deflection elements $DM_i$ and $DM_{i+1}$ are equal to:

$$G_{i,i+1} = P_i(P_{i+1} - 1)/(P_i - 1).$$

**13.** The optical module as claimed in any one of claims 9 to 12, in which the deflection elements (10, 11, 12, 13, etc.) each have two different angular positions separated by an angle $\delta\theta_X$ about axes parallel to a common direction OX and two different angular positions separated by an angle $\delta\theta_Y$ about axes parallel to a common direction OY and such that the magnifications $G_{i,i+1}$ of the various optical conjugation elements are all equal to 2.

**14.** The module as claimed in claim 13, in which the angle $\delta\theta_Y$ is equal to $\delta\theta_X$.

**15.** The module as claimed in claim 13 or claim 14, in which the axis OY is perpendicular to OX.

**16.** The module as claimed in any one of claims 9 to 15, **characterized in that** the deflection elements are swivel mirrors.

**17.** The module as claimed in any one of claims 9 to 12, **characterized by** a series placement of two successive cascades, the various deflection elements (10, 11, 12, 13, etc.) of which can adopt angular positions $P_1$, $P_2$, ... $P_i$, ... $P_N$ only along a single common direction and in which the single common direction of the rotation axes of each of the deflection elements of the first cascade is chosen to be orthogonal to the common direction of the rotation axes of each of the deflection elements of the second cascade.

**18.** The module as claimed in any one of claims 9 to 17, in which the number of different angular positions $P_1$, $P_2$, ... $P_i$, ... $P_N$ that can be adopted by the various deflection elements $DM_1$, $DM_2$, ... $DM_i$, ... $DM_N$ about the various rotation axes of common direction $OX_1$, $OX_2$, ... $OX_i$ ..., $OX_N$ is equal to 2 or 3, it being possible for the magnifications $G_{i,i+1}$ then to adopt the following various values:

$$G_{i,i+1} = P_i(P_{i+1}-1)/(P_i-1) = 2 \text{ for } P_i = 2 \text{ and } P_{i+1} = 2$$

$$G_{i,i+1} = P_i(P_{i+1}-1)/(P_i-1) = 3 \text{ for } P_i = 3 \text{ and } P_{i+1} = 3$$

$$G_{i,i+1} = P_i(P_{i+1}-1)/(P_i-1) = 4 \text{ for } P_i = 2 \text{ and } P_{i+1} = 3$$

$$G_{i,i+1} = P_i(P_{i+1}-1)/(P_i-1) = 3/2 \text{ for } P_i = 3 \text{ and } P_{i+1} = 2.$$

**19.** The module as claimed in any one of claims 1 to 18, in which the deflection elements comprise swivel micromirrors produced using the collective fabrication processes involved in microtechnologies.

**20.** The optical module as claimed in any one of claims 1 to 19, in which the optical conjugation elements associated with two consecutive deflection elements comprise respectively at least one lens.

**21.** The optical module as claimed in claim 19, **characterized in that** each optical conjugation element associated with two consecutive deflection elements comprises at least two lenses in confocal configuration, the ratio of the focal lengths of which is equal to the desired magnification between the two elements.

**22.** The optical module as claimed in any one of claims 1 to 21, in which the deflection elements involved are all inclined to the optical axis at an angle $\varphi$ chosen to be 45°.

**23.** The optical module as claimed in any one of claims 1 to 22, in which the deflection and optical conjugation elements are grouped in linear arrays or in matrices and are all inclined at the same angle $\varphi$ to the general optical axis of the device, but for which each of the optical axes of the various conjugation elements (20, 21, 22, 23, etc.) remains parallel to this general optical axis.

24. The optical module as claimed in any one of claims 1 to 23, in which the deflection positions of each of the deflection elements are monitored by a monitoring device (50) using:

- spatial splitter elements (51) for taking off a fraction of the light power of the optical signal beams deflected by the various deflection elements;
- optical projection elements (52) for converting, in a one-to-one manner, the various angular deflection positions into as many spatial positions, these optical projection elements being grouped in configurations identical to those of the deflection elements; and
- detection elements (53) for detecting the spatial positions thus formed, having a number of pixels at least equal to the total number of angular positions generated within the monitoring stage in question, the configuration of the pixels of the photodetector being homothetic with that of the set of angular deflection positions to be monitored.

25. The module as claimed in claim 24, in which the optical projection elements are associated with image magnification elements (54).

26. The module as claimed in claim 24 or claim 25, in which the detection elements are linear arrays or matrices of CMOS photodetectors.

27. The module as claimed in any one of claims 24 to 26, in which the device (50) for monitoring the angular deflection positions uses ancillary optical beams (70) that have a wavelength favorably different from that of the optical signal beams and are superposed on the latter using dichroic plates (55).

28. The module as claimed in any one of claims 1 to 6, 9 to 12, 17 and 19 to 27, **characterized in that** each deflection element has a number of different angular deflection configurations about a given axis equal to 2.

29. The optical module as claimed in any one of claims 1 to 28, **characterized in that** it furthermore includes an additional conjugation element placed after the final deflection element.

**Patentansprüche**

1. Optisches Ablenkmodul, das so beschaffen ist, dass es mehrere Winkelpositionen für wenigstens ein auftreffendes Lichtstrahlenbündel erzeugt, wobei dieses Modul für jedes Lichtstrahlenbündel eine Leitung aufweist, wobei diese Leitung umfasst:

- eine Mehrzahl von N Ablenkelementen ($MD_1$, $MD_2$, ..., $MD_I$, ..., $MD_N$), die in Kaskade angeordnet sind und jeweils $P_1$, $P_2$, ..., $P_I$, ... bzw. $P_N$ einzelne Winkelablenkkonfigurationen um wenigstens eine gegebene Achse annehmen können, und
- eine Mehrzahl von N - 1 optischen Zuordnungselementen ($MCO_1$, $MCO_2$, ..., $MCO_I$, ..., $MCO_{N-1}$), die jeweils zwischen zwei aufeinander folgenden Ablenkelementen angeordnet sind, derart, dass zwischen diesen aufeinander folgenden Ablenkelementen eine Objekt-Bild-Zuordnung verwirklicht wird.

2. Modul nach Anspruch 1, das so beschaffen ist, dass es mehrere Winkelpositionen für eine Mehrzahl von auftreffenden Lichtstrahlenbündeln erzeugt, bei dem für jedes auftreffende Lichtstrahlenbündel eine Leitung vorhanden ist und die Ablenkelemente und die optischen Zuordnungselemente jeder Leitung mit den homologen Elementen anderer Leitungen innerhalb von Gesamtheiten, die durch Reihen gebildet sind, zusammengefasst sind.

3. Modul nach Anspruch 1, das so beschaffen ist, dass es mehrere Winkelpositionen für eine Mehrzahl von auftreffenden Lichtstrahlenbündeln erzeugt, bei dem für jedes auftreffende Lichtstrahlenbündel eine Leitung vorhanden ist und die Ablenkelemente und die optischen Zuordnungselemente jeder Leitung mit den homologen Elementen anderer Leitungen innerhalb von Gesamtheiten, die durch Matrizen gebildet sind, zusammengefasst sind.

4. Modul nach Anspruch 2 oder Anspruch 3, bei dem die innerhalb jeder Gesamtheit zusammengefassten Ablenkelemente jeweils eine Anzahl $P_1$, $P_2$, ..., $P_I$, ... bzw. $P_N$ von einzelnen Winkelablenkkonfigutationen, die gleich sind, haben.

5. Modul nach einem der Ansprüche 2 bis 4, bei dem die Ablenkelemente $MD_1$, $MD_2$, ..., $MD_I$, ..., $MD_N$, die in Kaskade angeordnet sind und jeweils $P_1$, $P_2$, ..., $P_I$, ... bzw. $P_N$ einzelne Winkelablenkkonfigurationen annehmen können, einzige und parallele gegebene Achsen haben.

6. Modul nach einem der Ansprüche 2 bis 4, bei dem die Ablenkelemente ($MD_1$, $MD_2$, ..., $MD_I$, ..., $MD_N$), die in Kaskade angeordnet sind und jeweils $P_1$, $P_2$, ..., $P_I$, ..., bzw. $P_N$ einzelne Winkelablenkkonfigurationen annehmen können, einzige gegebene Achsen haben, die zu der einen oder der anderen von zwei Referenzachsen (OX, OY) parallel sind.

7. Modul nach einem der Ansprüche 2 bis 4, bei dem die Ablenkelemente ($MD_1$, $MD_2$, ..., $MD_I$, ..., $MD_N$), die in Kaskade angeordnet sind und jeweils $P_1$, $P_2$, ..., $P_I$, ... bzw. $P_N$ einzelne Winkelablenkkonfigurationen annehmen können, jeweils zwei gegebene Achsen haben, die zu zwei Referenzachsen (OX, OY) parallel sind.

8. Modul nach einem der Ansprüche 1 bis 7, **dadurch gekennzeichnet, dass** die einzelnen Winkelablenkkonfigurationen um die gegebenen Achsen gleich beabstandet sind.

9. Modul nach einem der Ansprüche 1 bis 8, bei dem die in Kaskade angeordneten Ablenkelemente $MD_1$, $MD_2$, ..., $MD_I$, ..., $MD_N$ jeweils durch Kippen um wenigstens eine gegebene Achse $P_1$, $P_2$, ..., $P_I$, ... bzw. $P_N$ einzelne Winkelpositionskonfigurationen annehmen können, die ermöglichen, eine äquivalente Anzahl von einzelnen Winkelablenkungen zu erzeugen, die jeweils in Winkelrichtung durch Werte $\delta\theta_1$, $\delta\theta_2$, ..., $\delta\theta_I$, ..., $\delta\theta_N$ um wenigstens eine Familie von Drehachsen $OX_1$, $OX_2$, ..., $OX_I$, ..., $OX_N$ getrennt sind.

10. Modul nach Anspruch 9, bei dem die Drehachsenfamilien eine gemeinsame Richtung haben.

11. Modul nach Anspruch 9 oder Anspruch 10, bei dem die Gesamtwinkelauswanderungen jedes der Ablenkelemente gleich sind.

12. Modul nach einem der Ansprüche 9 bis 11, bei dem die Vergrößerungen $G_{I,I+1}$, die die paarweise Zuordnung verschiedener aufeinander folgender Ablenkelemente $MD_I$ und $MD_{I+1}$ ermöglichen, gegeben sind durch:

$$G_{I,I+1} = P_I * (P_{I+1} - 1)/(P_I - 1).$$

13. Optisches Modul nach einem der Ansprüche 9 bis 12, bei dem die Ablenkelemente (10, 11, 12, 13, ...) jeweils zwei einzelne Winkelpositionen, die um einen Winkel $\delta\theta_X$ um parallele Achsen mit einer gemeinsamen Richtung OX getrennt sind, und zwei einzelne Winkelpositionen, die um einen Winkel $\delta\theta_Y$ um parallele Achsen mit einer gemeinsamen OY getrennt sind, aufweisen, derart, dass die Vergrößerungen $G_{II+1}$ der verschiedenen optischen Zuordnungselemente alle gleich 2 sind.

14. Modul nach Anspruch 13, bei dem der Winkel $\delta\theta_Y$ gleich $\delta\theta_X$ ist.

15. Modul nach Anspruch 13 oder Anspruch 14, bei dem die Achse OY zu OX senkrecht ist.

16. Modul nach einem der Ansprüche 9 bis 15, **dadurch gekennzeichnet, dass** die Ablenkelemente orientierbare Spiegel sind.

17. Modul nach einem der Ansprüche 9 bis 12, **gekennzeichnet durch** die Reihenanordnung von zwei aufeinander folgenden Kaskaden, deren verschiedene Ablenkelemente (10, 11, 12, 13, ...) nur Winkelpositionen $P_1$, $P_2$, ..., $P_I$, ... $P_N$ längs einer einzigen gemeinsamen Richtung annehmen können, wobei die einzige gemeinsame Richtung der Drehachsen jedes der Ablenkelemente der ersten Kaskade senkrecht zu der gemeinsamen Richtung der Drehachsen jedes der Ablenkelemente der zweiten Kaskade gewählt ist.

18. Modul nach einem der Ansprüche 9 bis 17, bei dem die Anzahl einzelner Winkelpositionen $P_1$, $P_2$, ..., $P_I$, ..., $P_N$ die von den verschiedenen Ablenkelementen $MD_1$, $MD_2$, ..., $MD_I$, ... $MD_N$ um die verschiedenen Drehachsen mit gemeinsamer Richtung $OX_1$, $OX_2$, ..., $OX_I$, ..., $OX_N$ angenommen werden können, gleich 2 oder 3 ist, wobei die Vergrößerungen $G_{I,I+1}$ dann die folgenden verschiedenen Werte annehmen können:

$$G_{I,I+1} = P*(P_{I+1} - 1)/(P_I - 1) = 2 \text{ für } P_I = 2 \text{ und } P_{I+1} = 2$$

$$G_{I,I+1} = P*(P_{I+1} - 1)/(P_I - 1) = 3 \text{ für } P_I = 3 \text{ und } P_{I+1} = 3$$

$$G_{I,I+1} = P*(P_{I+1} - 1)/(P_I - 1) = 4 \text{ für } P_I = 2 \text{ und } P_{I+1} = 3$$

$$G_{I,I+1} = P*(P_{I+1} - 1)/(P_I - 1) = 3/2 \text{ für } P_I = 3 \text{ und } P_{I+1} = 2$$

19. Modul nach einem der Ansprüche 1 bis 18, bei dem die Ablenkelemente orientierbare Mikrospiegel umfassen, die in gemeinsamen Fertigungsverfahren, die in den Mikrotechnologien eingesetzt werden, hergestellt werden.

20. Optisches Modul nach einem der Ansprüche 1 bis 19, bei dem die optischen Zuordnungselemente, die zwei aufeinander folgenden Ablenkelementen zugeordnet sind, jeweils wenigstens eine Linse umfassen.

21. Optisches Modul nach Anspruch 19, **dadurch gekennzeichnet, dass** jedes optische Zuordnungsclement, das zwei aufeinander folgenden Ablenkelementen zugeordnet ist, wenigstens zwei Linsen in einer Konfiguration mit gleichen Brennpunkten hat, bei denen das Verhältnis der Brennweiten gleich der gesuchten Vergrößerung zwischen den zwei Elementen ist.

22. Optisches Modul nach einem der Ansprüche 1 bis 21, bei dem die eingesetzten Ablenkelemente in Bezug auf die optische Achse global um einen Winkel φ, der gleich 45° gewählt ist, geneigt sind.

23. Optisches Modul nach einem der Ansprüche 1 bis 22, bei dem die Ablenkelemente und die optischen Zuordnungselemente in Reihen oder Matrizen gruppiert sind und in Bezug auf die allgemeine optische Achse global um denselben. Winkel φ geneigt sind, bei dem jedoch jede der optischen Achsen der verschiedenen Zuordnungselemente (20, 21, 22, 23, ...) zu dieser allgemeinen optischen Achse parallel bleibt.

24. Optisches Modul nach einem der Ansprüche 1 bis 23, bei dem die Ablenkpositionen jedes der Ablenkelemente durch eine Steuervorrichtung (50) gesteuert werden, die folgendes verwendet:

- räumliche Trennelemente (51), die ermöglichen, einen Teil der Lichtleistung der Signallichtstrahlenbündel, die durch die verschiedenen Ablenkelemente abgelenkt werden, abzugreifen,
- optische Projektionselemente (52), die ermöglichen, die verschiedenen Winkelablenkpositionen eineindeutig in ebenso viele räumliche Positionen zu transformieren, wobei diese optischen Projektionselemente in Konfigurationen gruppiert sind, die mit jenen der Ablenkelemente übereinstimmen,
- Erfassungselemente (53) für die auf diese Weise gebildeten räumlichen Positionen, die eine Anzahl von Punkten haben, die wenigstens gleich der Gesamtzahl von Winkelpositionen ist, die auf der betrachteten Ebene der Steuerstufe erzeugt werden, wobei die Konfiguration von Punkten des Photodetektors homothetisch zu jener der zu steuernden Gesamtheit von Winkelablenkpositionen ist.

25. Modul nach Anspruch 24, bei dem die optischen Ptojektionselemente Bildvergrößerungselementen (54) zugeordnet sind.

26. Modul nach Anspruch 24 oder Anspruch 25, bei dem die Erfassungselemente Reihen oder Matrizen aus CMOS-Photodetektoren sind.

27. Modul nach einem der Ansprüche 24 bis 26, bei dem die Steuervorrichtung (50) für die Winkelablenkpositionen sekundäre Lichtstrahlenbündel (70) mit einer Wellenlänge verwendet, die vorzugsweise von jener der Signallichtstrahlenbündel verschieden ist, die diesen letzteren mit Hilfe von dichroitischen Plättchen (55) überlagert werden.

**28.** Modul nach einem der Ansprüche 1 bis 6, 9 bis 12, 17, 19 bis 27, **dadurch gekennzeichnet, dass** jedes Ablenkelement eine Anzahl einzelner Winkelablenkkonfigurationen um eine gegebene Achse hat, die gleich 2 ist.

**29.** Optisches Modul nach einem der Ansprüche 1 bis 28, **dadurch gekennzeichnet, dass** es außerdem ein zusätzliches Zuordnungselement umfasst, das hinter dem ersten Ablenkelement angeordnet ist.

FIG.1a

FIG.1b

FIG.2

FIG. 11

FIG.3b   FIG.3a

FIG.3c

FIG.4a   FIG.4b

FIG.5

| M1 incidence : 1 point | M1 réflexion : 2 points |
|---|---|

| M2 incidence : 2 points | M2 réflexion : 4 points |
|---|---|

| M3 incidence : 4 points | M3 réflexion : 8 points |
|---|---|

| M4 incidence : 8 points | M4 réflexion : 16 points |
|---|---|

| M5 incidence : 16 points | M5 réflexion : 32 points |
|---|---|

FIG.7

FIG.6

| M1 incidence 1 point | M1 réflexion 4 points |
| M2 incidence 4 points | M2 réflexion 16 points |
| M3 incidence 16 points | M3 réflexion 64 points |
| M4 incidence 64points | M4 réflexion 256 points |

FIG.8

FIG.9

FIG.10a

FIG.10b